(19) Europäisches Patentamt / European Patent Office / Office européen des brevets

(11) **EP 1 807 991 B1**

(12) **EUROPEAN PATENT SPECIFICATION**

(45) Date of publication and mention
of the grant of the patent:
**20.02.2008 Bulletin 2008/08**

(21) Application number: **04797675.8**

(22) Date of filing: **05.11.2004**

(51) Int Cl.:
$H04L\ 27/26^{(2006.01)}$  $H04L\ 1/00^{(2006.01)}$

(86) International application number:
**PCT/EP2004/012571**

(87) International publication number:
**WO 2006/048037 (11.05.2006 Gazette 2006/19)**

(54) **MULTIUSER TRANSMISSION SYSTEM**

MEHRBENUTZER-ÜBERTRAGUNGSSYSTEM

SYSTEME DE TRANSMISSION MULTI-UTILISATEURS

(84) Designated Contracting States:
**DE GB**

(43) Date of publication of application:
**18.07.2007 Bulletin 2007/29**

(73) Proprietor: **NTT DoCoMo Inc.**
**Chiyoda-Ku**
**Tokyo 100-6150 (JP)**

(72) Inventors:
• **BAUCH, Gerhard**
**80799 Munich (DE)**
• **TEJERA, Pedro,**
**TU München**
**80290 Munich (DE)**

(74) Representative: **Zinkler, Franz et al**
**Schoppe, Zimmermann, Stöckeler & Zinkler**
**Postfach 246**
**82043 Pullach bei München (DE)**

(56) References cited:
• **KHALED N ET AL: "Spatial-mode selection for the joint transmit and receive MMSE design over flat-fading MIMO channels" SIGNAL PROCESSING ADVANCES IN WIRELESS COMMUNICATIONS, 2003. SPAWC 2003. 4TH IEEE WORKSHOP ON ROME, ITALY 15-18 JUNE 2003, PISCATAWAY, NJ, USA,IEEE, US, 15 June 2003 (2003-06-15), pages 11-15, XP010713458 ISBN: 0-7803-7858-X**
• **XI ZHANG ET AL: "Joint space-frequency optimization in multi user mimo system" SIGNAL PROCESSING AND INFORMATION TECHNOLOGY, 2003. ISSPIT 2003. PROCEEDINGS OF THE 3RD IEEE INTERNATIONAL SYMPOSIUM ON DARMSTADT, GERMANY 14-17 DEC. 2003, PISCATAWAY, NJ, USA,IEEE, 14 December 2003 (2003-12-14), pages 170-173, XP010729121 ISBN: 0-7803-8292-7 cited in the application**

## Description

The invention is in the field of telecommunications, and, in particular, in the field of multiple input multiple output (MIMO) systems.

In a point to multipoint communication system, as for instance the downlink of a mobile communication system, the transmitter has the important task of assigning resources such as time, frequency and space components to the receivers under its coverage. If the transmitter does not have any channel knowledge, different time or frequency slots are assigned to every user so as to avoid multi-user interference. However, if the transmitter knows each user's channel, multiple users can be served at the same time and over the same frequency multiplexing them over space.

In this context, by way of example only, a number of users $K$, each receiving information from the channel through a number of outputs $r_k$ will be considered. The transmitter sends information to the channel through a number of inputs $t$ and a sequence of $N$ channels is considered which is perfectly known at the transmitter. This sequence can be viewed as the $N$ orthogonal channels of a multicarrier transmission scheme such as OFDM. Considering the $N$ channels, a composite channel can be defined as

$$H = \begin{bmatrix} H(1) \cdots H(N) \end{bmatrix} \in \mathbb{C}^{r_1 + \ldots + r_K \times tN} \qquad (1.1)$$

For a particular frequency n the corresponding multi-user channel is given by

$$H(n) = \begin{bmatrix} H_1(n)^T \cdots H_K(n)^T \end{bmatrix}^T \in \mathbb{C}^{r_1 + \ldots + r_K \times t} \qquad (1.2)$$

where $H_k(n)$ is the matrix corresponding to user $k$ on the $n$th subcarrier. Typically, the maximum number of signals that can be multiplexed over such a channel is given by the minimum dimension of matrix $H(n)$, i.e. min$\{r_1 + \ldots + r_k, t\}$. Here, apart from precoding signals in order to multiplex information in the spatial domain, a decision must be made about the number of spatial dimensions a user is assigned to at every frequency, i.e. subcarrier allocation is needed, and both precoding and subcarrier allocation are designed according to a certain optimality criterion.

A solution for the sum capacity maximization has been found for $N = 1$ in S. Vishwanath, N. Jindal, and A.J. Goldsmith:."Duality, Achievable Rates, and Sum-Rate Capacity of Gaussian MIMO Broadcast Channels", IEEE Trans. on Information Theory, Vol. 49:2658-2668, Oct. 2003, which can straightforwardly be extended to any $N > 1$. However, this is a theoretical result that presumes infinite implementational complexity. More relevant for practical implementation are zero forcing approaches that decouple spatial components assigned to different users and make possible the application of rate maximizing bit loading techniques over the resulting orthogonal subchannels.

For $t \geq r_1 + \ldots + r_k$ and $r_1 = \ldots = r_k = 1$ it is well known that a linear zero forcing precoder can be applied to every subcarrier, S. Thoen, L. Perre, M. Engels, and H. Man.: "Adaptive Loading for OFDM/SDMA-Based Wireless Networks", IEEE Trans. Communications, Vol. 50: 1798-1810, 2002, in order to get a set of orthogonal channels over which transmission rate can be maximized subject to total transmit power and error rate constraints. A better option is to induce a triangular structure in the channel matrix by precoding with a unitary matrix at the transmitter. Though channels are not completely decoupled the remaining interference can be effectively neutralized applying the dirty paper coding principle of M. Costa, "Writing on Dirty Paper", IEEE Trans. on Information Theory, Vol. 29:439-441, May 1983. As in: G. Caire and S. Shamai: "On the Achievable Throughput of a Multi-Antenna Gaussian Broadcast Channel", IEEE Trans. on Information Theory, Vol. 49:1691-1706, July 2003, we call this technique zero forcing dirty paper coding (ZF-DPC). Taking into account the set of effectively decoupled scalar channels, which is given by the diagonal entries of the triangular channel matrix, a maximization of the sum rate can be easily carried out by utilizing the loading techniques of: G. Ginis and J. Cioffi, "A Multi-user Precoding Scheme achieving Crosstalk Cancellation with Application to DSL Systems", Asilomar Conference on Signals, Systems and Computers, pages 1627-1631, Oct. 2000. Regarding this last method it is observed that the ordering of the rows of the channel matrices H(n), which indicates the ordering in which signals destined to the different users are encoded, is crucial for the resulting sum rate. In: C. Windpassinger, T. Vencel, and R.F.H. Fischer, "Precoding and Loading for BLAST-like Systems", in ICC'03, pages 3061-3065, Anchorage, Alaska, May 2003, an ordering method has been proposed that aims at a maximization of the sum rate. However, the method relies on the condition $t \geq r_1 + \ldots + r_k$. If $t < r_1 + \ldots + r_k$ subcarrier allocation must be performed prior to the ordering of users and for this issue the method proposed in: C. Windpassinger, T. Vencel, and R.F.H. Fischer: "Precoding and Loading for BLAST-like Systems", in ICC'03, pages 3061-3065, Anchorage, Alaska, May 2003, does not offer any answer.

If some of the users in the point to multipoint link have several channel outputs, i.e. $r_k > 1$, a straightforward

approach would consist of treating channel outputs as individual users and applying the techniques described in the previous paragraph. Accordingly, interference between outputs of a same user (multistream interference) is suppressed, thus elevating the number of zero forcing constraints unnecessarily. In: R.L. Choi, M.T. Ivrlac, R.D. Murch, and J.A. Nossek, "Joint Transmit and Receive Multi-user MIMO Decomposition Approach for the Downlink of Multi-User MIMO Systems", in VTC Fall '03, Orlando, Oct. 2003, a linear zero forcing approach has been introduced that only suppresses interference between users (multi-user interference). The result is a set of decoupled (orthogonal) channel matrices corresponding to different users. A diagonalization of these matrices is then possible by applying unitary transformations at the transmitter and the receivers. Over the set of resulting orthogonal channels a maximization of the sum rate is possible using loading techniques. However, the method exhibits very poor performance for low rank channel matrices $H(n)$ and does not tackle the subcarrier allocation problem that arises if $t < r_1 + ... + r_k$.

As it can be observed, the problem of spatial precoding combined with subcarrier allocation has so far been almost completely ignored in the literature. Moreover, most of the work on MIMO-OFDM assumes $t \geq r_1 + ... + r_k$ over all subcarriers or solve the problem in two steps resorting to very heuristic methods that do not necessarily lead to a maximization of the sum rate, such as that is described by: X. Zhang and B. Ottersten: "Joint Space-Frequency Optimization in Multi-user MIMO Systems", in IEEE Symposium on Signal Processing and Information Theory (ISSPIT), Darmstadt, Germany, 2003. Furthermore, specific spatial precoding for the case of users with several channel outputs has scarcely been addressed.

It is the object of the present invention to provide a concept for an efficient multi-user separation in a multi-user transmission system.

This object is achieved by an apparatus according to claim 1, or by an apparatus according to claim 15, or by an apparatus according to claim 28, or by an apparatus according to claim 34, or by a method according to claim 40, or by a method according to claim 41, or by a method according to claim 42, or by a method according to claim 43, or by a computer program according to claim 44.

The present invention is based on the finding that an efficient multi-user transmission system can be provided, when different user signals being associated with different users are transmitted within different subspaces, the subspaces being orthogonal to each other, wherein each user transmitter transmitting within the inventive communication environment may be assigned a unique and user-specific subspace for transmission.

The finding is based on the fact that a user signal in digital domain comprising a plurality of coefficients can be viewed as a vector arranged within a space, in which the coefficients of the vector are arranged.

For example, a user signal comprising three coefficients can be considered as being a vector arranged within a three-dimensional space, the space being spanned by orthogonal eigenvectors being associated with eigenvalues or singular values. Moreover, an eigenvalue associated with an eigenvector may be considered as being an attenuation or amplification factor being associated with a space direction determined by the eigenvector.

According to the present invention, the user signals may be associated with a certain, common frequency, which may result when assigning signals to sub-carriers in a multicarrier system. In order to transmit the signals at the certain frequency, the subspaces may be subspaces associated with the certain frequency. Moreover, according to the present invention, other user signals associated with another frequency may be projected on other subspaces being orthogonal to each other. In addition, the available bandwith can efficiently be exploited for e.g. a multi-user transmission since the same frequency band can be used for a plurality of user signals sharing same frequencies but being transmitted within different subspaces.

In this context, the term "subspace" refers to a partial part of a space. Referring again to the above example, a subspace associated with a three-dimensional space may be for example a plane spanned by eigenvectors being associated with e.g. a first and a second direction (e.g. x, y components). However, a subspace may also be spanned by only one eigenvector. In this case, the subspace is one-dimensional. Generally speaking, a subspace being associated with a space has less dimensions than the space itself.

The inventive approach is simple, since known geometric and linear signal processing methods, for example rotation, projection or subspace-selective processing, where e.g. only some signal components being associated with certain subspaces are processed, are to be implemented.

The present invention exploits the geometric interpretation of digital signals and provides a concept for processing and separation of multi-user signals , where different user signals being associated with different users are projected onto different subspaces, wherein any subspace is orthogonal to any other subspace.

For example, a base-station employing the inventive concept for transmitting a multi-user signal to a first receiver and to a second receiver being spatially separated from the first receiver and from the base-station may be configured for processing a first user signal to be received by the first receiver and a second user signal to be received by the second receiver. In order to enable e.g. an efficient multi-user separation at the receivers, the base-station may be configured, in accordance with the present invention, for projecting the first user signal onto a first subspace, for projecting the second user signal onto a second subspace, the second subspace being orthogonal with respect to the first subspace, and for superimposing the resulting spatially separated signals in order to obtain a transmit signal to be simultaneously transmitted by e.g. a plurality of transmitting points to the first and to the second receiver. If channel influences are perfectly removed at a respective receiver, than the first receiver can extract the first user signal from a received version of the transmit signal by capturing the first subspace while suppressing the second subspace. Correspondingly, the second receiver may be configured for capturing the second subspace in order to extract the second user signal and to suppress the first subspace containing the first user signal.

However, if the communication channels, i.e. if a first communication channel extending between the transmitter and the first receiver and the second communication channel extending between the transmitter and the second receiver are non-orthogonal with respect to each other, then interference may appear. In this case, the receiver may be configured for equalizing the channels in order to remove the interferences for capturing the respective subspace.

In addition to the equalization concept, the present invention further provides a concept for dealing with non-orthogonal channels in order to prevent for interferences corrupting the respective separated user signal, wherein only certain sub-spaces are chosen.

Instead of orthogonalizing the channels, i.e. instead of controllably introducing interferences into the first and second user signal for compensating the interferences resulting when transmitting through physical communication channels, the present invention provides a concept based on linear projections of the signals onto different "channel subspaces", wherein e.g. the first signal is projected onto a first subspace of a space being determined by coefficients of the first channel extending between the transmitter and the first receiver, and where the second user signal is projected onto a second subspace of a space being determined by coefficients of the second channel extending between the transmitter and the second receiver are arranged.

In other words, instead of orthogonalizing the channels, only certain "channel subspaces" being orthogonal to each other are used for transmitting different user signals, wherein "channel subspaces" being non-orthogonal with respect to other "channel subspaces" are excluded from transmitting the user signals.

For example, the transmitter comprises t transmitting points, each transmitting point comprising an antenna, wherein the transmit signal comprising t coefficients is to be simultaneously transmitted by the t transmitting points, i.e. wherein each coefficient of the transmit signal is to be transmitted by a different transmitting point. In case of t being greater than one, the resulting channel is determined by different paths associated with each transmitting point. Hence, the channel coefficients may be arranged to form a matrix comprising a plurality of columns and e.g. t rows or vice versa.

In order to enable the inventive user separation at a respective receiver by transmitting the first user signal and the second user signal within subspaces being orthogonal to each other, and in order to reduce interferences due to a non-orthogonality of the communication channels, the first subspace, onto which the first user signal is to be projected, is a subspace of a space in which the coefficient of the first channel matrix are arranged. Furthermore, according to the present invention, the second subspace is a certain subspace of a space in which coefficients of the second channel matrix are arranged. More specifically, the second subspace is chosen from the space, in which the coefficients of the second channel matrix are arranged, such that the second subspace is orthogonal to the first subspace. Since the different user signals are projected onto orthogonal subspaces depending on the respective channel, the interferences may be completely eliminated or, at least, reduced in spite of the fact that the transmit signal is transmitted through non-orthogonal channels.

The present invention further provides a possibility for a spatial- and user selective assigning communication resources to different users depending on certain transmission requirements like e.g. quality of service, bit error rate, delay, etc. Referring again to the example with the two user signals, the first user signal may require more bandwidth than the second user signal. In this case, the first subspace may be chosen such that it has more dimensions than the complementary second subspace to be used for transmitting the second user signal. For example, the subspace assignment may be performed in a plurality of subsequent steps. In a first step, the first subspace having a sufficiently large dimension for increasing the data rate or being spanned by eigenvectors associated with large eigenvalues for reducing attenuation, or, generally, in order to fulfill the transmission requirement being associated with transmitting the first user signal, is chosen. Since the first and the second communication channel may be non-orthogonal to each other, then the first subspace may have components overlapping with the space, in which coefficients of the second channel are arranged. Therefore, the second subspace can be chosen from a resulting complementary space, in which coefficients of the second channel are arranged, the complementary space resulting when excluding the overlapping components of the first subspace from the space from which coefficients of the second channel are arranged.

The present invention further provides a possibility for a spatial- and user selective assigning communication resources to different users depending on certain transmission requirements like e.g. minimum channel attenuation, transmission delay, user priority, bit rate, bit error rate etc.

In reference to the above discussed example in respect to the two user signals, the components of the first and second subspace, i.e. the eigenvectors spanning the first subspace and the eigenvectors spanning the second subspace, may successively be determined during subsequent iteration steps. In other words, instead of successively determining subspaces, which is the inventive concept described above, for example, eigenvectors e.g. either for the first or for the second subspace may be determined. Therefore, certain characteristics of single eigenvalues associated with the eigenvectors to be chosen can be taken into account while successively, for example, iteratively, determining the first and the second subspace such that both subspaces are orthogonal with respect to each other. Therefore, certain subspace properties can explicitly be taken into account.

A possible subspace property may be associated with a transmission property, since e.g. attenuation may directly depend on eigenvalues associated with eigenvectors spanning the subspace. In this case, it would be of interest to select eigenvectors being associated with largest eigenvalues. For example, in a first iteration step, an eigenvector associated with a largest eigenvalue among available eigenvalues is chosen, for example for the first or second user. Subsequently, a subspace being spanned by the chosen eigenvector may be subtracted from the available subspace in order to obtain a reduced subspace for further iterations.

In a further iteration step, the reduced subspace may be subject to performing a singular value decomposition in order to obtain eigenvalues and eigenvectors associated therewith, the eigenvectors spanning the reduced subspace. In a further iteration step, the eigenvalues may be analyzed in order to determine e.g. a further largest value among the determined eigenvalues. For example, the further largest eigenvalue may be assigned to a first or to a second user, depending on e.g. a user requirement like e.g. a bit error rate, quality of service, delay etc, or depending on the suitability of the eigenvector for the respective user.

In a further iteration step, a subspace being spanned by the previously selected eigenvectors may be subtracted from the available subspace to obtain a complementary subspace serving as a basis for further iterations and so forth. The iteration may stop when all available dimensions being associated with the available subspace are assigned to users, or when the remaining dimensions are associated with e.g. small eigenvalues, e.g. 0.01 the largest eigenvalue, so that a significant attenuation is to be expected for the corresponding spatial directions so that these directions are not taken into account. At the end of the iterations, the eigenvectors being assigned to the first user span the first subspace and the eigenvectors being assigned to the second user span the second subspace. Since, in each iteration, the already assigned subspace may subtracted from the currently available subspace, in the following a complementary space is taken into consideration. Therefore, orthogonality between the resulting first and second subspace can always be achieved.

In this context, the term "orthogonal" relates to the case, where an ideal and rounding error-free determination of eigenvectors spanning the sub-spaces can be performed. However, when digitally calculating the eigenvectors, only a limited computation accuracy may be achieved so that an orthogonality error due to e.g. due to a finite word-length or rounding error may occur. Therefore, in the following, the term "orthogonal" relates e.g. to vectors, being orthogonal within an orthogonality range extending between e.g. 0 and 0.001, 0 and 0.01 or 0 and 0.1 (e.g. in relation to non-orthogonality), depending on a computational accuracy.

It is an advantage of the present invention that the inventive geometric processing of the user signal is linear and simple since the user signals are only to be projected onto different subspaces. These projections can be efficiently performed by multiplying a respective user signal by a respective projection matrix.

Since the present invention is based on projecting the user signals onto different subspaces being associated with different channels instead of introducing interferences into signals to be transmitted, the inventive concept is robust against fluctuations of the channel coefficients which e.g. do not influence the orthogonality of the subspaces.

Further embodiments of the present invention will be described in respect to the following figures, in which:

Fig. 1     shows a block diagram of an apparatus for generating coefficients spanning different subspaces being orthogonal with respect to each other according to an embodiment of the present invention:

Fig. 2     shows a black box representation of the inventive approach;

Fig. 3     shows a diagram demonstrating the inventive approach;

Fig. 4     demonstrates the performance of the inventive approach;

Fig. 5     demonstrates the performance of the inventive approach;

Fig. 6     demonstrates the performance of the inventive approach;

Fig. 7     demonstrates the performance of the inventive approach;

Fig. 8     demonstrates the performance of the inventive approach; and

Fig. 9     demonstrates the performance of the inventive approach.

In the following, for the sake of simplicity, only the case of two users will be assumed in the following. The following descriptions and features apply, however, in the case of a plurality of users in a straightforward way.

In order to determine weighting coefficients to be used for weighting the user signals such that the user signals are projected onto orthogonal subspaces, the present invention provides an apparatus for generating a first set of weighting coefficients and a second set of weighting coefficients, wherein the first set of weighting coefficients is to be used for weighting a first user signal associated with a first user to obtain a first transmit signal, and wherein the second set of weighting coefficients is to be used for weighting a second user signal to obtain a second transmit signal.

For example, the first and second transmit signals are to be transmitted by a common transmitter, e.g. a base station, to separate and non-cooperating receivers, each receiver being associated with a user, respectively. In this case, the transmit signals may be superimposed prior to transmission. However, the first transmit signal may be transmitted by a transmitter being associated with the first user and the second transmit signal may be transmitted by a second transmitter being associated with the second user, wherein the first and the second transmitter may be separated transmitters non-cooperating with each other, and wherein the first and the second transmit signals are to be transmitted to e.g. a common receiver, for example a base-station. In this case, the transmitted first and second transmit signals superimpose during transmission.

Accordingly, the apparatus for generating the weighting coefficients may be a part of a common transmitter for a part of a respective receiver, or a part of a common receiver or a part of a respective transmitter.

In order to generate the respective set of weighting coefficients, the apparatus may comprise means for calculating $m$ eigenvectors spanning a first subspace of a space, $m$ being equal to or greater than 1, so that the $m$ eigenvectors form the first set of weighting coefficients to be assigned to the first user. Correspondingly, the means for calculating is configured for calculating $n$ eigenvectors spanning a second subspace of a further space, the second subspace being orthogonal to the first subspace, $n$ being equal to or greater than 1, wherein the $n$ eigenvectors may form the second set of coefficients for the second user.

The space and the further space may be different, user specific spaces from which the respective subspace is to be chosen. However, the space and the further space may be equal, so that the respective subspaces may by chosen from a space common for the users.

Additionally, the number $m$ of eigenvectors for the first user may be differ from a number $n$ of eigenvectors for the second user. Since a number of eigenvectors determines a dimension of a corresponding subspace, different bit rates may be assigned to different users by assigning different dimensions to the users so that, e.g. a user-specific quality of service or user-priority may be taken into account while generating the sets of weighting coefficients.

However, $m$ and $n$ may be equal, so that the first and the second users are assigned the same number of eigenvectors, and, hence, dimensions. In this case, e.g. different tolerable bit error rates associated with the same bit rate for the users may be taken into account.

According to the present invention, the means for calculating may configured for iteratively calculating the eigenvectors. In this regard, the means for calculating the eigenvectors may be configured for firstly determining the $m$ eigenvectors spanning the first subspace, and, after having determined the first subspace, for determining the $n$ eigenvectors spanning the second subspace.

However, the means for calculating may be configured for iteratively calculating the eigenvectors being comprised by the first or by the second subspace, wherein, in each iteration step, e.g. either an eigenvector of the first subspace or an eigenvector of the second subspace are determined.

In both cases, the first set of weighting coefficients is determined such that, after weighting the first user signal using the first set of weighting coefficients, the first transmit signal represents a projection of the first user signal onto the first subspace and, after weighting the second user signal using the second set of weighting coefficients, the second transmit signal represents a projection of the second user signal onto the second subspace.

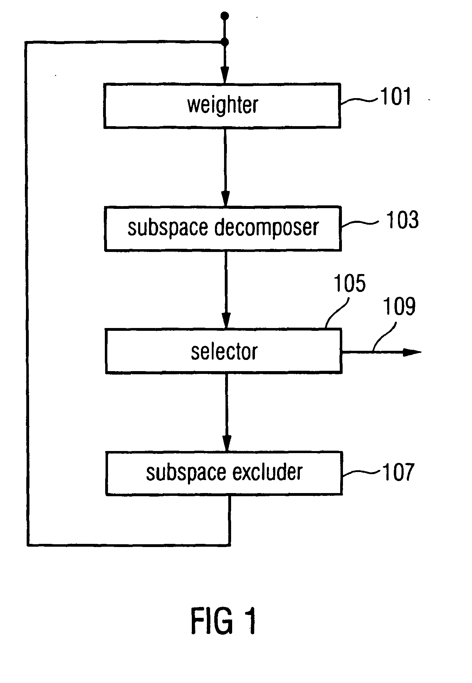

Fig. 1 shows a block diagram of an apparatus for generating a first and second set of weighting coefficients in accordance with a further embodiment of the present invention.

The apparatus shown in Fig. 1 comprises a weighter 101 having an input and an output, the output being coupled to an input of a subspace decomposer 103, the subspace decomposer 103 having an output coupled to an input of a selector 105, the selector 105 having an output coupled to a subspace excluder 107, the subspace excluder 107 having an output coupled to the input of the weighter 101. Furthermore, the selector 105 may comprise a further output 109.

For example, the weighter 101, the subspace decomposer 103, the selector 105 and the subspace excluder 107 are comprised by the means for calculating the weighting coefficients.

The apparatus shown in Fig. 1 is configured for generating a first set of weighting coefficients spanning a first subspace and for generating a second set of weighting coefficients spanning a second subspace, wherein, in accordance with the present invention, the first subspace and the second subspace are orthogonal to each other within an orthogonality range mentioned above.

According to the present invention, the first set of weighting coefficients is to be used for weighting a first user signal to obtain a first transmit signal representing a projection of the first user signal onto the first subspace. Accordingly, the second set of coefficients is to be used for weighting a second user signal to obtain a second transmit signal representing a projection of the second user signal onto the second subspace.

For example, the apparatus shown in Fig. 1 may be comprised by a common transmitter, e.g. a base-station, being configured for simultaneously transmitting signals to a plurality of receivers, each receiver being associated with a respective user. In this case, the apparatus may be further configured for superimposing the first transmit signal and the second transmit signal in order to obtain a transmit signal to be transmitted to e.g. a first receiver being associated with the first user and to a second receiver being associated with the second user.

The present invention further provides a multi-user separation system, where a plurality of transmitters transmits different user signals to a common receiver, the common receiver being e.g. a base-station, or where a common transmitter (e.g. a base station) transmits signals to a plurality of distinct receivers associated with different users. In this case, each transmitter being associated with a respective user may comprise the apparatus shown in Fig. 1, wherein for example only the subset of weighting coefficients will be determined which spans a subspace being associated to a respective user. In this case, the plurality of transmit signals are separately transmitted to the receiver, the receiver being configured for capturing a respective subspace being associated to a respective receiver in order to extract a respective user signal.

Furthermore, the inventive apparatus shown in Fig. 1 may also be arranged within a central communication management unity being configured for managing multi-user transmission. In this case, the apparatus shown in Fig. 1 may further comprise a transmitter being configured for transmitting the first set of weighting coefficients being associated with the first user to a first transmitter being configured for transmitting the first user signal. Accordingly, the apparatus shown in Fig. 1 may be configured for transmitting the second set of weighting coefficients to a second transmitter being configured for transmitting the second user signal. Accordingly, the apparatus may transmit the first and the second set of weighting coefficients to a common transmitter transmitting different signals to a plurality of receivers.

Furthermore, the apparatus shown in Fig. 1 may also be configured for generating weighting coefficients to be used at a transmitter or a receiver for weighting a received signal in order to capture a respective subspace to extract a respective user signal.

As mentioned above, the inventive apparatus for generating weighting coefficients may be configured for iteratively generating the first and the second set of weighting coefficients in order to determine first and second subspaces being orthogonal to each other, onto which the first and the second user signals are to be projected, respectively, in order to obtain the first and the second transmit signal.

However, when transmitting the first and the second transmit signal through communication channels which are not orthogonal with respect to each other, interferences may occur. Moreover, when transmitting e.g. the first transmit signal using a plurality of transmitting points, wherein each transmitting point comprises a transmit antenna, then the resulting communication channel extending between the transmitter comprising the transmitting points and a receiver possibly comprising a number of receiving points, each receiving point having an antenna, may be represented by a channel matrix having channel coefficients. Since the channel coefficients are arranged to form the channel matrix, elements of the channel matrix are elements of a space in which the channel coefficients are arranged. This channel space is spanned by eigenvectors and eigenvalues, wherein the eigenvalues may be viewed as attenuation coefficients in respect to a corresponding spatial direction being determined by the corresponding eigenvector. Therefore, when e.g. transmitting the first transmit signal through the communication channel, spatial components of the first transmit signal associated with spatial directions of the channel matrix suffering from a significant attenuation may significantly be attenuated.

According to the invention, the above problems are dealt with by appropriately choosing the first and the second subspace. For example, the subspaces may be channel-specific.

For example, the apparatus comprises means for providing channel information comprising channel coefficients representing the communication channel associated with the first user, e.g. the communication channel extending between a transmitter and a receiver associated with the first user, and channel coefficients associated with the second user, correspondingly. The channel coefficients may be provided on a basis of channel estimation being performed e.g. at a respective receiver or at a respective transmitter.

According to an aspect of the present invention, the weighter 101 may be configured for weighting a first channel matrix representing a first channel being associated with the first user using a set of projection coefficients spanning a projection subspace to obtain a projected first channel matrix representing a projection of the first channel matrix onto the projection subspace, and/or for weighting a second channel matrix representing a second channel being associated with the second user using a set of projection coefficients spanning a projection subspace in order to obtain a projected second channel matrix representing a projection of the second channel matrix onto the projection subspace.

The subspace decomposer 103 may be configured for performing a singular value decomposition of the projected first channel matrix to obtain a first plurality of eigenvectors associated with eigenvalues, or for performing a singular value decomposition of the second projected channel matrix to obtain a second plurality of eigenvectors associated with eigenvalues.

According to the present invention, the selector 105 is configured for selecting s eigenvectors from the first plurality of eigenvectors, wherein s is a number being equal to or greater than zero and smaller than or equal to m, and wherein the s eigenvectors are eigenvectors being comprised by the first subspace, i.e. eigenvectors spanning at least a partial subspace of the first subspace. Correspondingly, the selector may be configured for selecting s eigenvectors from the second plurality of eigenvectors in order to determine the second subspace being orthogonal to the first subspace, wherein s is a number being equal to or greater than zero or equal to or greater than n.

As mentioned above, the first and second subspace may be determined iteratively, wherein, in each iteration step, either eigenvectors or subspaces are determined, depending on a number of eigenvectors selected in each iteration step.

In order to iteratively determine subspaces (subspace mode), the selector may be configured, in an iteration step, for selecting s=m eigenvectors spanning the first subspace for the first user and s=0 eigenvectors for the second user. In a further iteration step, the selector may by configured for selecting s=0 eigenvectors for the first user, since the first subspace has already been determined in a previous iteration step, and for selecting s=n eigenvectors spanning the second subspace for the second user. Conversely, the selector may first select s=n eigenvectors for the second user and then select s=m eigenvectors for the first user, when e.g. the priority of the second user is higher than the priority of the first user.

In accordance with a further aspect of the present invention, the selector may by configured for iteratively determine eigenvectors (eigenvector mode) for the respective subspaces. For example, in an iteration step, the selector may be configured for selecting s=2 eigenvectors of e.g. m=3 eigenvectors to be selected for the first user. In a further iteration step, the selector may select the remaining eigenvector to obtain m eigenvectors. However, in the further iteration step, the selector may select s=1 eigenvectors of e.g. n=2 eigenvectors for the second user, and for selecting the remaining eigenvector for the first or the second user in further iterations. Therefore, in this mode eigenvectors are determined.

Moreover, the subspace mode and the eigenvector mode may coexist.

For example, in a certain iteration step, the first subspace being spanned by m eigenvectors is to be determined (subspace mode). Therefore, in this iteration step, the selector will select s=m eigenvectors in order to obtain the eigenvectors spanning the first subspace and for selecting zero eigenvectors from the second plurality of eigenvectors, since the second subspace will be determined in a further iteration step. In the further iteration step, the selector will select n eigenvectors from the second plurality of eigenvectors in order to determine eigenvectors spanning the second subspace being orthogonal to the first subspace.

Instead of iteratively determining subspaces, the eigenvectors for the subspaces may iteratively be determined. In this case, the selector may, for example, select in an iteration step only one eigenvector being associated with a largest eigenvalue among the first and the second plurality of eigenvalues. For example, the largest eigenvalue is associated with the first user. After having selected the eigenvector being associated with the largest eigenvalue, a subspace being spanned by the eigenvector may be excluded from further considerations, e.g. excluded from an available subspace so that a reduced subspace remains. For example, the selected eigenvector may be excluded from the available eigenvectors in order to determine, in a next iteration step, e.g. a largest eigenvalue being associated with the remaining eigenvectors and so forth. However, in the next iteration step, the reduced subspace may be decomposed in order to obtain eigenvalues and eigenvectors spanning the reduced subspace. Then, again, e.g. a largest eigenvalue from the plurality of eigenvalues may be selected and so forth, wherein the plurality of eigenvalues may comprise the first and the second plurality of eigenvalues being associated with the first and the second plurality of eigenvectors. Therefore, the eigenvectors constituting the first and the second subspace are determined iteratively so that, after having performed a number of iteration steps, the eigenvectors spanning the first subspace and the eigenvectors spanning the second subspace are determined.

It is to be noted in each iteration step, the selector may be configured for selecting more than one eigenvector, for example for selecting 2 or 3 eigenvectors at once.

In order to set either the subspace mode or the eigenvector mode, the apparatus may further comprise a mode controller being configured for setting s=m or s=n in the subspace mode, and for setting s<m or s<n in the eigenvector mode. Moreover, the mode controller may e.g. set the subspace mode for a certain user having e.g. highest priority and the eigenvector mode for other users.

In order to exclude subspaces or partial subspaces being already assigned to the first or to the second user for preventing orthogonality, the subspace excluder 107 may be configured for subtracting a subspace spanned by the s eigenvectors being assigned to the first and/or to the second user from the protection subspace, i.e. from the available subspace spanned by the set of projecting coefficients in order to obtain a reduced projection subspace to be used as a projection subspace in a further iteration.

A number of iterations may be e.g. determined by a number of available dimensions to be assigned to the users. For example, the iteration process stops when, after performing a subspace exclusion, a resulting projection subspace is e.g. a zero subspace or comprises eigenvectors being associated with e.g. small eigenvalues introducing a significant attenuation when transmitting a resulting signal through the channel.

In order to perform the subspace subtraction (subspace exclusion), the subspace excluder 107 may be configured for determining a set of coefficients representing the subspace to be excluded on the basis of the s eigenvectors, and for subtracting the set of coefficients from the set of projecting coefficients such that an updated set of projecting coefficients representing the projection subspace result.

In order to initialize the iterations, e.g. a unity matrix can be chosen as the projection matrix to be used in a first iteration step. However, any other initial matrix, comprising e.g. all possible eigenvectors spanning a space in which coefficients of a plurality of channels may be arranged, may be chosen.

In order to iteratively determine eigenvectors/eigenvalues for the first/second subspace, the weighter 101 may be configured for weighting the first channel matrix and the second channel matrix using the same set of projection coefficients in order to obtain the projected first channel matrix representing a projection of the first channel matrix onto the projection subspace and to obtain the projected second channel matrix representing a projection of the second channel matrix onto the projection space. In other words, the first and the second channel matrix are projected onto the same projection subspace.

The subspace decomposer 103 may be configured for performing a subspace decomposition on a basis of a singular value decomposition of the projected first channel matrix and of the projected second channel matrix to obtain a plurality of eigenvectors associated with eigenvalues, the plurality of eigenvectors comprising e.g. the first and the second plurality of eigenvectors mentioned above. In other words, the projected matrices are decomposed into eigenvector and eigenvalue matrices using the subspace decomposition approach, e.g. using the singular value decomposition.

It is to be noted that instead of the singular value decomposition, also an eigenvalue decomposition may be performed, depending on a structure of the matrix to be decomposed, since the eigenvalue decomposition can be viewed as a special case of a singular value composition.

The selector 105 may be configured for selecting the s eigenvectors for the first user and/or for the second user from the plurality of the eigenvectors associated with the plurality of eigenvalues in dependence on a transmission property associated with transmitting the first and/or the second transmit signal.

For example, the selector may be configured for analyzing the eigenvalues and for selecting a certain eigenvalue from the plurality of eigenvalues, wherein the certain eigenvalue may have a certain eigenvalue property being associated with fulfilling the transmission property. For example, the selector is configured for selecting a largest eigenvalue among the plurality of eigenvalues, wherein the largest eigenvalue is associated with the smallest attenuation being the transmission property by way of example only.

According to a further aspect, the apparatus may comprise an analyzer for analyzing the eigenvalues. For example, the analyzer is configured for analyzing the eigenvalues in order to determine a number of largest eigenvalues among the analyzed eigenvalues.

After having selected the certain eigenvalue, the selector may be configured for selecting an eigenvector being associated with the certain eigenvalue. Furthermore, the selector may be configured for determining, whether the first eigenvector is associated with the first or the second channel, i.e. with the first or the second user. For example, the eigenvector being associated with the certain eigenvalue is associated with the first user. In this case, the selector may be configured for selecting k-1 eigenvectors associated with the first user, the k-1 eigenvectors being associated with e.g. largest eigenvalues associated with the first user. For example, the selector may be configured for selecting one or two additional eigenvectors associated with the first user. However, the selector may be configured not to select any further eigenvector in this iteration step (i.e. s=1 so that s-1=0) so that further selection is performed in a further iteration step.

Further embodiments for further transmission property will be discussed later.

Based on the selected eigenvectors, the subspace excluder 107 may be configured for determining a set of coefficients, e.g. a set of subspace coefficients representing the subspace, and for subtracting the set of subspace coefficients from the set of projection coefficients to obtain updated projection coefficients representing the reduced projection subspace, as has been described above. In particular, the reduced projection subspace can be first analyzed in order to determine whether further iterations are possible. If e.g. the reduced projection subspace a zero-subspace, then the iteration will be stopped. In a further iteration step, the reduced projection subspace will be used as a projection subspace, wherein the iteration steps will be performed until all subspaces to be determined are determined.

As indicated in Fig. 1, the weighter 101 may receive the updated projection coefficients as the projection coefficients from the subspace excluder 107. After having received the projection coefficients, the weighter 101 may be configured for weighting the first channel matrix and the second channel matrix using the updated projection coefficients to obtain an updated projected first channel matrix representing a projection of the first channel matrix onto the reduced projection subspace, and to obtain an updated projected second channel matrix representing a projection of the second channel matrix onto the reduced projection subspace.

Accordingly, the subspace decomposer 103 is configured for performing a singular value decomposition of the projected first and second channel matrices (the update) to obtain a plurality of eigenvectors associated with eigenvalues. Correspondingly, the selector 105 selects s further eigenvectors associated with the first user from the plurality of eigenvectors, s being equal to or greater than zero and equal to or smaller than m, or for selecting s further eigenvectors associated with the second user from the plurality of eigenvectors, s being equal to or greater than zero and equal to or smaller than n, wherein a subspace spans by the s further eigenvectors is orthogonal to a subspace spanned by the eigenvectors provided in a previous iteration step.

Correspondingly, the subspace excluder 107 is configured for subtracting a subspace spanned by the s further eigenvectors being determined either for the first or for the second user from the reduced projection subspace in order to obtain a further projection subspace to be used as a projection subspace in a further iteration, and so forth.

For example, the set of projecting coefficients is arranged to form a matrix. In this case, the weighter 101 may be configured for performing a matrix-by-matrix multiplication in order to obtain the projected first or second channel matrix. Therefore, the subspace projection is a linear operation, which can be implemented using standard hardware components, which contributes to a complexity reduction.

In order to determine the set of subspace coefficients to be used for subspace exclusion, the subspace excluder 107 may be configured for determining e.g. a product of eigenvectors and to subtract the product of eigenvectors from the current projecting coefficients in order to update the projecting coefficients.

In accordance with the present invention, the first and second set of weighting coefficients may be determined for a certain frequency, so that further first and further second sets of weighting coefficients may be determined for a further frequency. Generally speaking, the apparatus may be configured for determining the first and second set of coefficients for each available frequency using the available bandwidth. For example, the first user signal is associated with a subcarrier at a certain frequency and the second user signal is associated with a subcarrier at the same, certain frequency. For example, the first user signal and a second user signal are subject to a multicarrier modulation scheme, wherein the first and the second user signal are to be transmitted on a subcarrier being associated with the certain frequency. In other words, the first and the second user signal may share the same frequency.

In this case, the means for calculating may be configured for calculating the first and second set of weighting coefficients for the certain frequency, such that the first transmit signal and the second transmit signal are signal at the certain frequency. In other words, the first and the second user signal and the first and the second transmit signal may be associated with the same frequencies but with different subspaces.

Correspondingly, the inventive apparatus may be further configured for generating a further first set of weighting coefficients at a further certain frequency to be used for weighting a further first user signal associated with the first user and the further certain frequency in order to obtain a further first transmit signal at the further certain frequency, and for generating a further second set of weighting coefficients at the further certain frequency, the further second set of weighting coefficients to be used for weighting a further second user signal associated with the second user and the further certain frequency to obtain a further second transmit signal at the further certain frequency.

Correspondingly, for the further certain frequency, the means for calculating may be configured for calculating p eigenvectors spanning a further first subspace of another subspace at the further certain frequency, p being equal to or greater than 1, the p eigenvectors forming a further first set of coefficients for the first user, and for calculating q eigenvectors spanning a second subspace of another further space at the further certain frequency, the q eigenvectors forming the further second set of weighting coefficients, and q being equal to or greater than 1. The p and q eigenvectors are determined such that the other further subspace is orthogonal to the other subspace for both inventive scenarios i.e. when either the subspaces or the eigenvectors are iteratively determined.

In the following, the inventive concept for the case s=m or s=n, where subspaces are iteratively determined (subspace mode) will be described with respect to the apparatus shown in Fig. 1.

The weighter 101 may be configured for weighting the first channel matrix representing a first channel being associated with the first user using a first set of projecting coefficients to obtain a projected first channel matrix. The first set of projecting coefficients spans a projection subspace, so that the projected first channel matrix represents a projection of the first channel matrix onto the projection subspace.

The first channel matrix is provided to the subspace decomposer 103 which is configured for performing a singular value decomposition of the projected first channel matrix to provide a plurality of eigenvalues associated with eigenvectors.

The plurality of eigenvectors and the eigenvalues associated therewith is provided to the selector 105 being configured for selecting m eigenvalues from the plurality of eigenvalues, m being equal to or greater than 1, and for providing m eigenvectors associated with the m eigenvalues as the first set of weighting coefficients via the output 109, wherein the m eigenvectors span the first subspace.

An information on the first subspace, for example, the m eigenvectors is then provided to the subspace excluder 107 being configured for excluding the first subspace from the projection subspace in order to obtain a reduced projection subspace being spanned by a second set of projection coefficients. In other words, the subspace excluder 107 may be configured for performing a subspace subtraction, wherein the already determined subspace is subtracted from the projection subspace in order to exclude subspaces being assigned to the first user. Therefore, the reduced projection subspace represents a complementary subspace remaining when excluding the first subspace from the (original) projection subspace.

The apparatus may be further configured for excluding the first user signal from further considerations and to iteratively determine the second subspace onto which the second user signal is to be projected in a next iteration step, by way of example only.

As is shown in Fig. 1, the weighter 101 receives information on the remaining, complementary subspace being represented by the second set of projecting coefficients spanning the reduced projection subspace.

Using this information, the weighter 101 is configured for weighting a second channel matrix representing a second channel being associated with the second user using the second set of projecting coefficients in order to obtain a projected second channel matrix, wherein the projected second channel matrix represents a projection of the second channel matrix onto the reduced projection subspace.

Accordingly, the subspace decomposer 103 receives the projected second channel matrix and performs a singular value decomposition of the projected second channel matrix to obtain a further plurality of eigenvalues associated with eigenvectors, in exactly the same way as has been described in respect to the first user.

Correspondingly, the selector 105 may be configured for selecting n eigenvalues from the further plurality of eigenvalues, n being equal to or greater than 1, n being equal to or different from m, and for providing n eigenvectors being associated with the n eigenvalues as the second set of weighting coefficients, wherein the n eigenvectors span the second subspace.

As mentioned above, the first and second channel matrices represent channels being associated with the first and the second user. More specifically, the first channel matrix may determine channel coefficients in the downlink or uplink direction, wherein e.g. a transmitter transmits a transmit signal using t transmitting, points, each transmitting point comprising a transmitting antenna, t being equal to or greater than 2, and wherein a receiver being associated with a user employs r receiving points, r being equal or greater than 1. Correspondingly, the first channel may be represented by a first channel matrix comprising channel coefficients for the uplink direction, where a transmitter being associated with a user is configured for transmitting a transmit signal using t transmitting points to a (common) receiver, for example a base-station, employing r receiving points, each receiving point comprising a receive antenna.

In order to determine the channel-dependent subspaces, onto which the user signals are to be projected, the apparatus shown in Fig. 1 requires information on coefficients of the first channel matrix and the second channel matrix. According to one aspect of the present invention, the channel information may be provided by e.g. a respective receiver being associated with the respective user, the respective receiver being configured for channel estimating.

Furthermore, the apparatus may comprise a storage element comprising a plurality of typical channel coefficients being associated with different channel scenarios, e.g. typical urban area or hilly terrain. In this case, the apparatus may refer to the plurality of stored channel coefficients in order to obtain the first channel matrix representing the first channel and/or the second channel matrix representing the second channel.

As mentioned above, the subspace assignment can be performed iteratively. In this case, the projection subspace being determined by the projection coefficients may be represented by e.g. a unity matrix comprising a plurality of eigenvectors being associated with equal eigenvalues. In a next iteration step, the projection subspace is replaced by the reduced projection subspace and so forth.

For example, the first set of projecting coefficients is arranged to form a first matrix comprising eigenvectors spanning the projection subspace. In this case, the weighter 101 is configured for performing a matrix by matrix multiplication and to multiply the first channel matrix by the first matrix to obtain the projected first channel matrix and, accordingly, for multiplying the channel matrix by a second matrix comprising eigenvectors spanning the reduced projection subspace, the eigenvectors representing the second set of projecting elements, in order to obtain the projected second channel matrix.

Therefore, the inventive distribution of different user signals onto different subspaces being orthogonal with respect to each other is a linear operation.

For example, the first transmit signal is to be transmitted by t transmitting points and to be received by r receiving points, or vice versa. In this case, the subspace decomposer 103 is configured for providing the plurality of eigenvectors being arranged to form a first eigenvector matrix and a second eigenvector matrix, the eigenvectors of the first eigenvector matrix having t coefficients and the eigenvectors of the second eigenvector matrix having r coefficients or vice versa. Correspondingly, the first eigenvector matrix and the second eigenvector matrix may be linked by a singular value matrix being a diagonal matrix comprising in the diagonal singular values being associated with the eigenvectors of the first eigenvector matrix and of the second eigenvector matrix. For example, the subspace decomposer 105 is configured for performing a subspace decomposition in order to provide a left eigenvector matrix, a diagonal eigenvalue or singular value matrix and a right eigenvector matrix. The same considerations apply to the second transmit signal.

As has been mentioned above, the apparatus shown in Fig. 1 may be configured for determining a plurality of subspaces to be assigned to different users wherein, preferably, the subspaces are iteratively determined starting with a certain user, e.g. will the first user.

According to the present invention, the selector 105 may be configured for selecting the m eigenvalues from the plurality of eigenvalues and for selecting the n eigenvalues from the further plurality of eigenvalues in dependence on a transmission property, or in other words, a transmission requirement, associated with transmitting the first transmit signal or, generally, the first user signal, and the second transmit signal or, generally, the second user signal.

For example, the selector 105 is configured for selecting the first subspace to be assigned to the first user in a first step and, subsequently, for selecting the second subspace to be assigned to the second user and so forth.

For example, the transmission property comprises quality of service requirement associated with transmitting the first user signal and/or the second user signal. For example, the transmission property may comprise a certain bit rate associated with a certain bit error ratio for the first user. In this case, the selector may be configured for selecting the m eigenvalues having the largest eigenvalues among the plurality of eigenvalues such that, simultaneously, m is maximized. This is due to the fact that the number of eigenvalues m directly determines the size of the first subspace, the larger the size of the first subspace the greater the achievable data rate.

After having selected the m eigenvalues, the selector 105 selects the n eigenvalues being associated with n eigenvectors spanning the second subspace onto which the second user signal is to be projected. Since the second subspace is a subspace being complementary to the first subspace, it is possible that, after having selected the m eigenvalues for the first user, it is not possible to select the second subspace being orthogonal to the first subspace so that the second user could not be transmitted. In order to prevent this situation, the selector 107 may be configured for taking a fairness criterion into account during the subspace selection process. More specifically, the selector 105 may be configured to select the number m of eigenvalues spanning the first subspace such that at least eigenvector spanning the second subspace can be found. For example, the selector may be configured for reducing the first subspace by excluding some eigenvectors being associated with e.g. smallest eigenvalues among the selected m eigenvalues when a non-zero subspace being orthogonal to the first subspace cannot be found, so that in a next iteration step, the second subspace can be determined.

Generally, the transmission property may comprise maximizing a data rate of the first user signal, maximizing a data rate of the second user signal, maximizing the data rate of the first user signal for a certain data rate of the second user signal, jointly maximizing the data of the first user signal and the second user signal, minimizing a transmission delay associated with transmitting the first user signal or with the second user signal, jointly minimizing a transmission delay associated with transmitting the first user signal and the second user signal, a quality of service requirement associated with transmitting the first user signal and/or the second user signal, attenuation of the first user signal when transmitting within the chosen first subspace, attenuation of the second user signal when transmitting within the chosen second subspace and so forth.

For subspace exclusion, the subspace excluder 107 may be configured for generating a set of coefficients comprising coefficients spanning the first subspace, and for subtracting the set of coefficients from e.g. the first set of projection coefficients to provide the second set of projection coefficients etc. This issue will be addressed later in detail.

Generally, the apparatus shown in Fig. 1 may be configured for generating the first set of weighting coefficients and the second set of weighting coefficients for a first frequency at which the first transmit signal and the second transmit signal are to transmitted, and for generating a further first set of weighting coefficients and a further second set of weighting coefficients for a further frequency at which the first and the second transmit signal are to be transmitted.

More specifically, the first user signal may be associated with a certain subcarrier, the certain subcarrier being associated with a certain frequency. Correspondingly, the second user signal may be associated with a subcarrier being associated with the certain frequency. In other words, the first user signal and the second user signal may share the same certain frequency. Since the present invention is not based on frequency separation but on space separation, the first set of weighting coefficients and the second set of weighting coefficients span the first and the second subspace at the certain frequency, so that the resulting first transmit signal and the second transmit signal are signals sharing the same frequency, but comprising user signals being arranged within different subspaces being orthogonal with respect to each other.

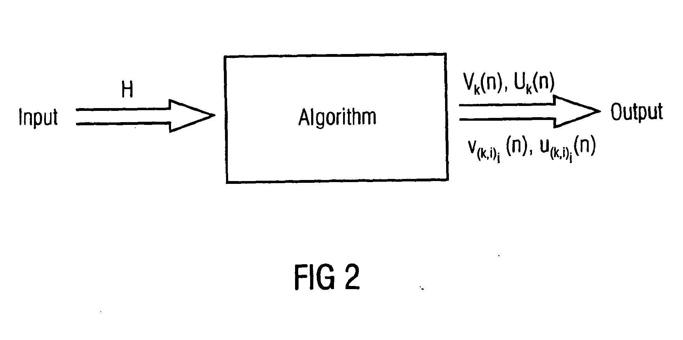

Correspondingly, the apparatus shown in Fig. 2 may be configured for determining the above-mentioned further first set of weighting coefficients spanning a further first space and for generating a further second set of weighting coefficients spanning a further second subspace, the further first subspace and the further second subspace being orthogonal to each other and to the first and second subspace. Correspondingly, the further first set of weighting coefficients may be used for weighting a further first user signal at a further certain frequency to obtain a further first transmit signal representing a projection of the further first user signal onto the further first subspace, the further second set of weighting coefficients to be used for weighting the further second user signal to obtain the further transmit signal representing a projection of the further second user signal onto the further second subspace at the further certain frequency and so forth.

In the subspace mode, the inventive method may, therefore comprise the following steps: weighting a first channel matrix representing a first channel being associated with the first user using a first of projecting coefficients to obtain a projected first channel matrix, the first set of projecting coefficients spanning a production subspace, the projected first channel matrix representing a projection of the first channel matrix onto the projection subspace, performing a singular value decomposition of the projected first channel matrix to provide a plurality of eigenvalues associated with eigenvectors, selecting m eigenvalues from the plurality of eigenvalues, n being greater than or equal to 1, and providing m eigenvectors associated with the m eigenvalues as the first set of weighting coefficients, the m eigenvectors spanning the first subspace, excluding the first subspace from the projection subspace being spanned by the first set of projection coefficients to obtain a reduced projection subspace being spanned by a second set of projection coefficients, after the step of excluding the first subspace from the projection subspace, weighting a second channel matrix representing a second channel being associated with the second user, using the second set of projection coefficients to obtain a projected second channel matrix, the projected second channel matrix representing a projection of the second channel matrix onto the reduced projection subspace, performing a singular value decomposition of the projected second channel matrix to obtain a further plurality of eigenvalues associated with eigenvectors, and selecting n eigenvalues from the further plurality of eigenvalues and being greater than or equal to 1, and providing n eigenvectors associated with n eigenvalues as the second set of weighting coefficients, the n eigenvectors spanning the second subspace.

In the eigenvector mode, the method determines eigenvectors instead of subspaces.

It is noted that the functionalities of both the eigenvector mode and the subspace mode can be implemented on the basis of the apparatus as described above with regard to Fig.1.

In accordance with a further aspect, the present invention provides a zero forcing technique that utilizes a linear precoder to suppress part of the interference. The remaining interference can be neutralized by applying successive encoding. The technique applies to any number of inputs t and user outputs $r_k$. If $r_1 = ... = r_k = 1$, this approach reduces to the above-mentioned ZF-DPC technique with a sum rate maximizing ordering that simultaneously constitutes a criterion according to which subcarrier allocation can be carried out. If some of the users have multiple channel outputs, orthogonal spatial dimensions, which are characterized by a precoding vector at the transmitter and a weighting vector at the receiver, are successively assigned to users at each frequency. Due to the fact that signals received through different outputs belonging to a same user are combined in order to increase the gain of the resulting channels, i.e. the outputs cooperate, we call this technique cooperative zero forcing dirty paper coding (CZF-DPC).

CZF-DPC represents a general solution for the joint design of spatial precoding and subcarrier allocation in a point to multipoint MIMO communication system that very closely approaches the theoretical sum capacity limit of such a system.

Furthermore, due to the effective orthogonality of the resulting subchannels, this theoretical bound can be approached in practical implementations using codes for scalar channels in combination with loading techniques.

In the following the channel model introduced in Equations 1.1 and 1.2 is considered. At any frequency $n$ the relationship between receive signals and transmit signals is given by

$$\underbrace{\begin{bmatrix} y_1(n) \\ y_2(n) \\ \vdots \\ y_K(n) \end{bmatrix}}_{y(n)} = \begin{bmatrix} H_1(n) \\ H_2(n) \\ \vdots \\ H_K(n) \end{bmatrix} x(n) + \underbrace{\begin{bmatrix} n_1(n) \\ n_2(n) \\ \vdots \\ n_K(n) \end{bmatrix}}_{n(n)} \qquad (1.3)$$

It is to be noted that the index "$n$" appearing in the following equations relate to a certain frequency, contrary to the index "n" being used above for indicating a number of eigenvectors spanning the second subspace.

The noise vector $n(n)$ contains complex Gaussian independent identically distributed entries (If the noise variance of different users is different, the model can still be used by dividing the matrix of each user by the standard deviation of the respective noise process and considering a composite noise vector where elements have unit variance) and the transmit signal $x(n)$ can in general be expressed as the addition of multiplexed transmit signals corresponding to different users,

$$x = V_1 P_1^{1/2} x_1 + V_2 P_2^{1/2} x_2 + ... + V_K P_K^{1/2} x_K \qquad (1.4)$$

where index $n$ has been omitted for notational simplicity, $V_k \in C^{t \times q_k}$ is the precoding matrix of user $k$. This matrix has $q_k$ orthogonal columns with $0 \leq q_k \leq r_k$. $P_k \in R^{q_k \times q_k}$ is a diagonal matrix that assigns a certain power to each of the $q_k$ spatial dimensions used by user $k$ and $x_k \in C^{q_k \times 1}$ is a vector of signals such that $E\{x_k\} = 0$ and $E\{x_k x_k^H\} = I$.

As indicated above, the power assignment using the matrices P can be performed during weighting by the weighter. However, e.g. $P_1^{1/2} x_1$ may be considered as being the first user signal resulting from pre-processing first user sequence $x_1$ using $P_1^{1/2}$. The pre-processing may be performed by the inventive apparatus prior to weighting.

Prior to detection, at the receivers signals are preprocessed by applying weighting matrices $U_k \in C^{q_k \times r_k}$,

$$
\underbrace{\begin{bmatrix} y_1'(n) \\ y_2'(n) \\ \vdots \\ y_K'(n) \end{bmatrix}}_{y'(n)} = \begin{bmatrix} U_1(n) & 0 & \cdots & 0 \\ 0 & U_2(n) & \cdots & 0 \\ \vdots & \vdots & \ddots & \vdots \\ 0 & 0 & \cdots & U_K(n) \end{bmatrix} \begin{bmatrix} y_1(n) \\ y_2(n) \\ \vdots \\ y_K(n) \end{bmatrix} \qquad (1.5)
$$

The total number of information streams transmitted from the transmitter to the receivers on any subcarrier n is given by $q_1(n) + q_2(n) + \ldots + q_k(n)$ and can be as large as $\min\{t, r_1 + r_2 + \ldots + r_k\}$. Each spatial dimension is characterized by a precoding column vector $v_{(k,i)_j}(n) = [V_k(n)]_{.,i}$ and a weighting row vector $u_{(k,i)_j}^H(n) = [U_k(n)]_{i,\bullet}$ (Given a matrix A, $[A]_{i,}$ Denotes its ith row and $[A]_{.,i}$ its ith column). Each pair of indices $(k, i)$ has an index $j$ associated that indicates the order in which information transmitted over that spatial dimension is encoded relative to all other information streams transmitted over the same subcarrier. Encoding order plays a major role in this kind of systems. Specifically, if we consider the information stream transmitted over the spatial subchannel characterized by the pair $(v_{(k,i)_j}(n), u_{(k,i)_j}^H(n))$, interference caused by this stream on other streams that are subsequently encoded can be effectively neutralized by using a dirty paper coding technique with no capacity loss.

In the following, it will be described how to compute matrices $V_k(n)$ and $U_k(n)$ aiming at a maximization of the sum capacity of the system and at the same time decoupling spatial sub-channels so that achievable sum capacity can be approached by using standard loading techniques combined with coding techniques for scalar channels. Computation of these matrices involves the assignment of spatial dimensions to users, which can vary with frequency (subcarrier allocation), and the establishment of an encoding order for each information stream. Matrices $P_k(n)$ as well as the amount of bits carried by signals $x_k$ are no solution of the proposed method but result from the subsequent application of a loading technique on the resulting set of decoupled channels, as demonstrated in Fig. 2 showing a black box representation of the proposed approach.

The inventive approach can be executed on every subcarrier simultaneously. Although the result obtained on different subcarriers will normally differ, the algorithm itself is the same for every subcarrier. Therefore, a detailed description of this algorithm follows in which index n is omitted for notational simplicity.

The algorithm consists of three basic steps that lead to the establishment of a new spatial sub-channel. These three steps are repeatedly executed until all spatial dimensions have been assigned to users. The order in which spatial subchannels are established is the same order in which information streams transmitted through those channels are encoded and this order is indicated by index $j$.

Let's assume that the first $j - 1$ subchannels have been established. The execution of the $j$th loop begins computing the projections of the original single user channels into the subspace complementary to that spanned by all $j - 1$ precoding vectors previously computed,

$$
Step\ 1:\ H_k T_j = H_k^j\ \forall k,
$$

where $T_j$ is the projector matrix of that subspace which can be computed as follows,

$$T_j = I - \left[ v_{(k,i)_1} \cdots v_{(k,i)_{j-1}} \right] \begin{bmatrix} v_{(k,i)_1}^{\mathrm{H}} \\ \vdots \\ v_{(k,i)_{j-1}}^{\mathrm{H}} \end{bmatrix} \in \mathbb{C}^{t \times t}$$

For $j = 1$, the projector matrix is initialized as the identity matrix, i.e. $T_1 = I$.

The above equation determines the inventive subspace exclusion described above and can be performed by the subspace excluder, wherein a resulting matrix T comprises e.g. coefficients spanning a reduced subspace.

In a second step, the singular value decomposition of each projected single user channel matrix is computed,

$$\text{Step 2:} \quad H_k^j = L_k^j \sum_k^j R_k^j \ \forall k \,.$$

Finally, in the third step, the maximum of all computed singular values is chosen and the associated pair of right and left singular vectors are taken as the pair of precoding and weighting vectors to be applied at transmitter and receiver. This pair of vectors characterizes the spatial subchannel established in the execution of loop $j$.

$$\text{Step 3:} \quad k_0, \xi_0 = \arg\underset{k,\xi}{\max}\{\sigma_{k,\xi}\}, \ v_{(k_0,i)_j} = r_{k_0,\xi_0}, \ u_{(k_0,i)_j}^{\mathrm{H}} = \ell_{k_0,\xi_0}^{\mathrm{H}}$$

In the equalities above, $\sigma_{k,\xi}$ denotes the $\xi$ th singular value of user $k$, which corresponds to the entry in the $\xi$th row and $\xi$ th column of matrix $\sum_k$, $r_{k,\xi}$ is the associated right singular vector, which is equal to the conjugate transpose of the $\xi$ th row vector of matrix $R_k$, and $\ell_{k_0,\xi_0}^{\mathrm{H}}$ the corresponding left singular vector, which is the conjugate transpose of the $\xi$ th column vector of matrix $L_k$.

As already mentioned, these three steps are repeated until the number of dimensions assigned to users equals the total number of spatial dimensions available in the channel, which is usually given by min $\{t, r_1 + ... + r_k\}$. In the algorithm, this point is reached when the projection of the single user matrices in *step 1* results in matrices with all their entries equal to zero,

$$H_k T_j = 0 \ \forall k \qquad (1.6)$$

Referring again to the apparatus of Fig. 1, the projector matrix represents a $j$th set of projecting coefficients, the channel matrix obtained after step 1 represents a projected channel matrix. Correspondingly, the singular value decomposition being performed in step 2 may be performed by the inventive subspace decomposer.

As to step 3, the eigenvalues and eigenvectors are selected by the inventive selector, wherein the subspace excluder is configured for excluding the first subspace to obtain the projector matrix.

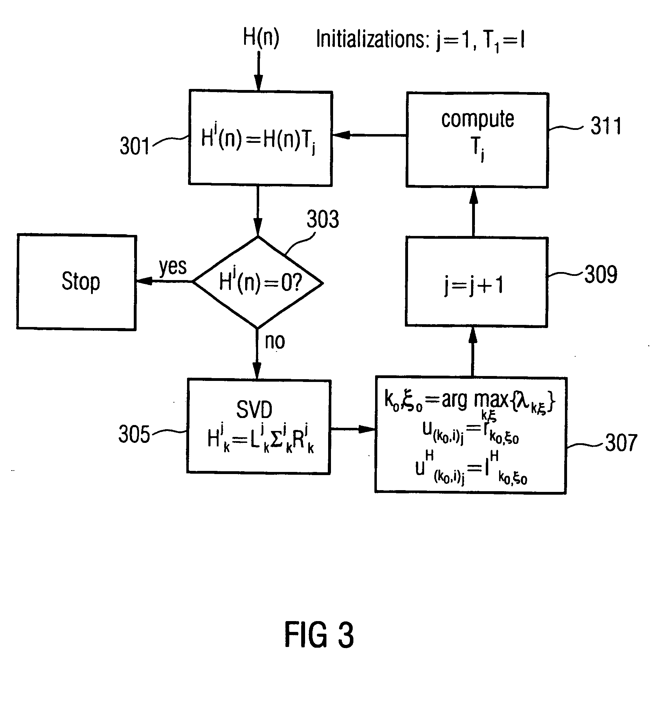

Fig. 3 shows a flow diagram of the invention approach. In block 301, a projection of a matrix onto a projected matrix is performed. Block 303 verifies whether the projected matrix is different from zero. In case the projected matrix equals zero, the computations are stopped. In case the projection matrix differs from zero, a singular value decomposition (SVT) is performed in block 305, wherein eigenvectors and eigenvalues are provided. In block 307, maximum eigenvalues and eigenvectors associated therewith are selected in order to obtain a set of weighting coefficients. In block 309, a counter is increased and a projection matrix is computed in block 311, wherein the new projection matrix serves as a projection matrix for obtaining a new projected channel matrix in a next iteration step.

As mentioned above, index j indicates the order in which the information stream sent over the corresponding spatial subchannel is encoded. The projection of the original channel matrix $H(n)$ into the orthogonal subspace of that defined by precoding vectors previously computed guarantees that any new precoding vector does not cause interference on already established spatial subchannels. As a consequence, the information stream encoded in the jth place does not cause any interference on previously encoded streams. However, in general, the information stream encoded in the jth place will cause interference on subsequently encoded information streams, which are transmitted over subsequently established spatial subchannels. Theoretically, this interference can be completely neutralized without capacity loss by taking it into account when encoding subsequent streams. In practical terms, suboptimal techniques can be applied that suppress this interference without incurring significant rate loss, one of these techniques is the conventional Tomlinson-Harashima precoding. In the next section a numerical example illustrates some of these features.

It can be observed that a first encoded information stream, for the case of two users by way of example only, which belongs to user 2, experiences a Gaussian channel with no interference. Indeed, the successive precoding vectors were chosen to make this possible. By contrast, on the information streams belonging to user 1, user 2 causes some interference, but since these streams are encoded after having encoded the stream destined to user 2, knowledge of the encoded signal sequence can be used to neutralize this interference with no capacity loss. As a consequence, for computation of sum capacity only the diagonal entries of the effective channel matrix are relevant. Interestingly, the algorithm achieves an effective diagonalization of the final single user channel matrices due to different "channel subspaces" onto which signals are projected so that no interference at all occurs between subchannels assigned to the same user. Diagonalization arises from matching weighting vectors at the receiver to the equivalent channel comprising the channel itself and the precoding vectors of a given user. Therefore, it can be said that the algorithm exploits cooperation of receive elements in order to avoid multistream interference and this is done without introducing additional zero forcing constraints.

The present invention provides an apparatus for providing a transmit signal from a first user signal associated with a first user and from a second user signal associated with a second user, the transmit signal to be transmitted by t transmitting points being comprised by a receiver. More specifically, the transmit signal comprises t transmit signal values, wherein each transmit signal value is to be transmitted by a different transmitting point, so that the t transmit signal values are simultaneously transmitted.

The apparatus comprises a provider configured for providing a first set of weighting coefficients spanning a first subspace and for providing a second set of weighting coefficients spanning a second subspace, wherein the first subspace and the second subspace are orthogonal with respect to each other. In accordance with the present invention, the first set of coefficients is arranged to form at least a vector having t coefficients. Correspondingly, the second set of weighting coefficients is arranged to form at least a vector having t coefficients.

The apparatus further comprises a weighter being configured for weighting the first user signal using the first set of weighting coefficients to obtain a first weighted signal representing a projection of the first user signal onto the first subspace, and for weighting the second user signal using the second set of coefficients to obtain a second weighted signal representing a projection of the second user signal onto the second subspace. In other words, the weighter is configured for arranging the first user signal within the first subspace and for arranging the second user signal within the second subspace, the first and second subspaces being orthogonal to each other, wherein the first weighted signal results from weighting the first user signal and wherein the second weighted signal results from weighting the second user signal.

The apparatus further comprises a superimposer configured for superimposing the first weighted signal and the second weighted signal to obtain the transmit signal.

The above apparatus may be comprised by a common transmitter (e.g. base-station) being configured for transmitting the transmit signal simultaneously to a first receiver being associated with the first user and to a second receiver being associated with the second user. The present invention provides therefore also a transmitter comprising the apparatus for providing a transmit signal, and t transmitting points, each transmitting point comprising e.g. a digital to analog converter, an amplifier and a transmit antenna.

Referring again to the apparatus for providing the transmit signal, the provider may be configured for providing the first set of coefficients being arranged to form a first matrix comprising m eigenvectors spanning the first subspace, m being equal to or greater than one. Correspondingly, the provider is configured for providing the second set of coefficients being arranged to form a second matrix comprising n eigenvectors, n being equal to or greater than 1, n being equal to m or being different from m. The weighter may be configured in this case for performing a matrix by a matrix multiplication, i.e. for multiplying the first user signal by the first matrix to obtain the first weighted signal and for multiplying the second user signal by the second matrix to obtain the second user signal.

Moreover, the provider may be configured for providing a number m of eigenvectors to be used for weighting the first user signal, and for providing a number n of eigenvectors to be used for weighting the second user signal in dependence on a transmission property associated with transmitting the first user signal or transmitting the second user signal. This issue has already been discussed in connection with the above-described apparatus for generating the weighting coefficients. Thus, the provider may be configured for providing eigenvectors such that a quality of service requirement being comprised by the transmission property is fulfilled.

For example, the provider is configured for providing the m eigenvectors to be used for weighting the first user signal in order to fulfill the transmission property associated with transmitting the first user signal, and for providing the n eigenvectors to be used for weighting the second user signal after having provided the m eigenvectors to be used for weighting the second user signal. In other words, the provider may be configured for iteratively and successively providing the eigenvectors for projecting different user signals onto different subspaces, the different subspaces being orthogonal to each other.

Moreover, the provider may be configured for jointly providing the m eigenvectors to be used for weighting the first user signal and for providing the n eigenvectors to be used for weighting the second user signal in order to fulfill a joint transmission property associated with transmitting the first user signal and the second user signal. The joint transmission property may, for example, comprise a minimum tolerable data rate for the first user, e.g. 128 kbit/s, and a minimum tolerable data rate for the second user, e.g. 56 kbit/s, or the like, as has been described in connection with the apparatus for generating the weighting coefficients.

In order to assign transmission resources in form of subspaces to different users, the provider may be configured for taking a fairness criterion into account, so that all users are allowed transmit information and no user is excluded from transmitting information due to a non-availability of a subspace being orthogonal to already assigned subspaces.

Therefore, the provider is configured for selecting the m eigenvectors to be used for weighting the first user signal from a plurality eigenvectors, and for selecting the n eigenvectors' to be used for weighting the second user signal from the plurality eigenvectors, wherein the provider comprises an eigenvalue analyzer being configured for analyzing the plurality of eigenvalues associated with the plurality of eigenvectors for selecting m eigenvectors being associated with m eigenvalues fulfilling an eigenvalue property, and for selecting n eigenvectors being associated with n eigenvalues fulfilling an eigenvalue property.

For example, the provider may be configured for selecting the m eigenvectors to be used for weighting the first user signal from a set of M eigenvectors, and for selecting the n eigenvectors to be used for weighting the second user signal from a set of N eigenvectors, in order to fulfill a transmission requirements, e.g. a bit error rate. For example, only those eigenvectors are selected which are associated with largest eigenvalues in order not to assign user signals to dimensions suffering from sever attenuation.

Additionally, the provider may comprise an eigenvalue analyzer being configured for analyzing the M eigenvalues associated with the M eigenvectors in order to select M eigenvectors being associated with M eigenvalues fulfilling an eigenvalue property. Furthermore, the analyzer may be configured for analyzing the N eigenvalues associated with the N eigenvectors in order to select n eigenvectors being associated with n eigenvalues fulfilling an eigenvalue property.

In either case, the eigenvalue property may be a value of an eigenvalue above a threshold, for example above 0.1 per % the largest eigenvalue being comprised by a respective set of eigenvalues.

Generally, the analyzer may be configured for determining a plurality of eigenvalues for all eigenvectors being comprised by the M and N set of eigenvectors, the plurality of eigenvalues having an eigenvalue above an eigenvalue threshold.

The provider provides m eigenvectors being associated with m largest eigenvalues being comprised by the plurality of eigenvalues and being associated with eigenvectors in the set of M eigenvectors, and for providing n eigenvectors being associated with n largest eigenvalues being comprised by the plurality of eigenvalues and being associated with eigenvectors in the set of N eigenvectors.

In other words, first the plurality of the largest eigenvalues is selected without considering from which set of eigenvalues it is selected so that in total only subspaces associated with largest eigenvalues are used.

However, it is possible that a certain subspace being associated with a certain channel, the certain channel being associated with a certain user, has eigenvalues which are e.g. below the threshold. In this case, this subspace would not be taken into account so that the certain user signal would not be transmitted. In order to prevent such a situation, the provider may select only second largest eigenvalues in order to provide fairness about users so that each user signal comprising one or more values can be transmitted within a subspace associated therewith.

It has been mentioned above that a dimension of a subspace directly determines an achievable data rate. If, for example, a subspace is spanned by m eigenvectors, then a user signal comprising m values can be projected onto the subspace. Hence, increasing m leads to increasing the length of a user signal and vice versa. If, for example, a subspace is spanned by only one eigenvector, then, correspondingly, m equals to 1 and only one value representing a user signal can be transmitted.

If, for each subspace, a number of eigenvectors is chosen in order to fulfill a transmission property or transmission requirement, then a corresponding number of values of each user signal are to be selected. This task can be performed by the weighter being e.g. configured for selecting m values from a first user data stream to obtain the first user signal to be projected onto the first subspace, and for selecting n values from a second user data stream to obtain the second user signal to be projected onto the second subspace.

However, the selection task can be performed by any other entity being comprised by the apparatus.

As has been mentioned above, the different user signals may share the same frequencies since the inventive user separation scheme is based on a spatial separation and not on a frequency separation. For example, the first user signal and the second user signal are assigned to a certain subcarrier at a certain frequency, i.e. at the same frequency. For example, the first user signal and the second user signal are frequency-domain user signals associated with a multicarrier modulation scheme, for example OFDM, which are assigned to a certain subcarrier. In other words, the first and second user signal may correspond to user signals to be transmitted through communication channels at the certain frequency.

Hence, the provider may be configured for providing the first set of weighting coefficients spanning the first subspace at the certain frequency and for providing the second set of weighting coefficients spanning the second subspace at the certain frequency to obtain the first weighted signal and the second weighted signal at the second frequency, so that the resulting transmit signal is associated with the certain frequency.

Same considerations apply for a further first user signal and a further second user signal being assigned to further certain subcarriers at a further certain frequency. The provider may be configured for providing a further first set of weighting coefficients spanning a further first subspace at the further certain frequency and for providing a further second set of weighting coefficient spanning a further second subspace at the further certain frequency, the further second subspace being orthogonal to the further first subspace, to obtain a further first weighted signal and a further second weighted signal at the further certain frequency. Correspondingly, the superimposer may be configured for superimposing the further first and second weighted signal and the first and second weighted signal in order to obtain a transmit signal.

Generally, the inventive apparatus may be configured for performing the inventive operations for each available frequency.

In order to reduce interferences due to non-orthogonal channels, the subspaces may be chosen in dependence on spaces in which coefficients of different channels are arranged. This issue has been addressed above in detail.

The provider may be further configured for providing a first set of coefficients spanning a first subspace of a first space, in which coefficients of a first channel extending between the plurality of transmitting points and a first receiver are arranged, and for providing a second set of weighting coefficients spanning a second subspace of a second space, in which coefficients of a second channel extending between the plurality of transmitting points and a second receiver are arranged, wherein the first receiver and the second receiver may employ one or more receiving points, each receiving point comprising a receive antenna. Therefore, interferences between the first weighted signal and the second weighted signal are reduced when simultaneously transmitting the transmit signal through the first channel and through the second channel.

Since a dimension of a space, in which channel coefficients are arranged, depends on a number of transmitting points and a number of receiving points, the number m of eigenvectors to be used for weighting the first user signal may be smaller than or equal to a number of receive antennas of a first receiver being associated with the first user. Correspondingly, a number n of eigenvectors to be used for weighting the second user signal is smaller than or equal to a number of receive antennas of a first receiver being associated with the second user. Therefore, the inventive apparatus may a priori determine a maximum available data rate for a user.

According to the present invention, the provider may be configured for generating the weighting coefficients to be used for projecting the user signals onto the subspaces associated therewith. For example, the provider may comprise the apparatus for generating the first set of weighting coefficients and the second set of weighting coefficients, as has been described above.

The above apparatus is configured for providing weighting coefficients to be used by a common transmitter, transmitting the transmit signal to different receivers being associated with different users. Since each user signal is projected onto a subspace being assigned to the user, the apparatus may be configured for transmitting receive sets of coefficients corresponding to the set of weighting coefficients to the different receiver such that each of the receivers can capture or catch the subspace in order to extract a corresponding user signal.

For example, the first set of weighting coefficients to be used for projecting the first user signal corresponds to a left eigenvalue matrix resulting when performing a singular value decomposition described above. Correspondingly, the set of weighting coefficients to be used by a receiver being associated with the first user for capturing the first subspace in order to extract the first user signal may be formed by the right eigenvalue matrix resulting when performing the singular value decomposition. This consideration also applies generally for any plurality of user signals so that each receiver has a certain "subspace k" for extracting only user signals being projected onto a subspace assigned to a respective user.

However, the inventive concept may also be applied for the uplink direction, where a plurality of receivers separately transmit transmit signals comprising user signals to a common receiver, the common receiver being e.g. a base-station. The present invention, therefore, further provides an apparatus for providing a transmit signal from a user signal, the transmit signal to be transmitted from t transmitting points of a transmitter being associated with the user to a common receiver in a communication environment in which a further transmitter is configured for transmitting a further transmit signal to the common receiver.

In accordance with the present invention, the further transmit signal may be determined using the inventive methods and represent a projection of a further user signal onto a subspace being assigned to the further transmitter. The apparatus, being preferably comprised by each transmitter being associated with each user, a provider for providing a set of weighting coefficients spanning a subspace being assigned to the transmitter, the subspace being orthogonal to the subspace being assigned to the further transmitter, wherein the set of weighting coefficients is arranged to form at least a vector having t coefficients. In other words, the set of weighting coefficients spans a subspace being complementary to the subspace or to the subspaces already used by other transmitters.

The apparatus further comprises a weighter configured for weighting the user signal using the set of coefficients to obtain the transmit signal representing a projection of the user signal onto the subspace being assigned to the transmitter.

For example, the set of weighting coefficients is generated by the inventive apparatus for generating the weighting coefficients, wherein the apparatus is comprised by the common receiver. Hence, the common receiver determines the sets of coefficients for each transmitter associated with each user, transmits the coefficients to each transmitter, each transmitter being simultaneously a receiver (transceiver) so that complexity is moved toward the base-station.

However, each transmitter may be equipped with the inventive apparatus for generating weighting coefficients and to communicate with the common receiver, the common receiver deciding on subspaces to be assigned to the transmitters such as orthogonality between subspaces can be achieved.

Correspondingly, the user signal and the further user signal may be assigned to a subcarrier at a certain, the same frequency, wherein the further transmit signal is being transmitted at the certain frequency. In this case, the provider may be configured for providing the set of weighting coefficients spanning the subspace being assigned to the transmitter and the certain frequency in order to obtain the transmit signal at the certain frequency. Accordingly, as has been described above, further user signals at further frequencies can be projected on further subspaces in order to obtain a spatial separation for each available frequency so that the transmitter may share the same bandwidth.

Summarizing, the provider may be configured for providing a further set of coefficients spanning another subspace being assigned to the transmitter, the other subspace being orthogonal to the subspace being assigned to the transmitter and to the subspace being assigned to the further transmitter, wherein the other set of weighting coefficients is arranged to form a least a vector having t coefficients, wherein the weighter is configured for weighting another user signal using the other set of weighting coefficients to obtain another transmit signal representing a projection of the other user signal onto the other subspace being assigned to the transmitter. Furthermore, the apparatus may comprise a superimposer being configured for superimposing the transmit signal and the other transmit signal to obtain a superimposed transmit signal to be transmitted by the t transmitting points. For example, the other user signal may be a signal at another frequency, so that the superimposer superimposes the transmit signals at different frequencies.

As has been described above, the set of weighting coefficients may comprise m eigenvectors spanning the subspace being assigned to the transmitter, m being equal to or greater than 1. In this case, the weighter may be further configured for selecting m values from a user signal stream to obtain the user signal comprising m values in order to adapt a data rate to the available mention of the subspace.

As has been mentioned above, the different user signals being assigned to different subspaces for transmission may be extracted at a receiver or at a respective receiver being associated with a respective user by catching the respective subspace and by suppressing the other subspaces.

In accordance with a further aspect, the present invention provides an apparatus for extracting a first user signal from a receive signal, the receive signal being received by a receiver comprising r receiving points, wherein r is equal to or greater than 1. The receive signal may comprise a superposition of a first transmit signal and of a second transmit signal, the first transmit signal representing a projection of the first user signal onto a first subspace, the second transmit signal representing a projection of the second user signal onto a second subspace, wherein in accordance with the present invention, the first subspace and the second subspace are orthogonal with respect to each other.

The apparatus may be comprised by a common transmitter or a common receiver (base-station). In this case, the first transmit signal is transmitted by a first receiver being associated with the first user and the second transmit signal is transmitted by a second transmitter being associated with a second user, by way of example only. However, the apparatus may be comprised by e.g. the first receiver for extracting the first user signal from a transmit signal comprising the first transmit signal and the second transmit signal in a superimposed manner. For example, the transmit signal is generated by a common transmitter (base-station) employing the inventive approach.

The apparatus comprises a provider configured for providing a receive set of weighting coefficients spanning a subspace being associated with the first subspace, the subspace being orthogonal to the second subspace, wherein the set of weighting coefficients is arranged to form at least a vector comprising r coefficients. Furthermore, the apparatus comprises a weighter configured for weighting the receive signal using the set of weighting coefficients for capturing the first subspace to extract a captured signal comprising the first user signal, and simultaneously, for suppressing the second subspace signal to exclude the second user signal from the captured signal in order to perform a multi-user separation scheme in accordance with the present invention.

The apparatus further comprises an extractor being configured for extracting the first user signal from the captured signal to provide an extracted first user signal. The extracted user signal may comprise, by way of example only, channel influence and channel noise such that the extractor may further comprise a detector, a filter, etc.

For example, the first transmit signal obtained from weighting the first user signal using a first set of weighting coefficients being arranged to form a matrix comprising m eigenvectors spanning the first subspace, the eigenvectors being associated with m eigenvalues, m being equal to or greater than 1. Accordingly, the provider may be configured for providing the receive set of weighting coefficients being arranged to form a matrix comprising m eigenvectors spanning the subspace, the m eigenvectors being associated with the m eigenvalues, wherein each eigenvector may comprise r coefficients. In this case, the weighter may be configured for performing a matrix by matrix multiplication, i.e. for multiplying the receive signal by the matrix to obtain the captured signal. In other words, the matrix represents a "subspace key" for catching the respective subspace.

Furthermore, the provider may be configured for providing a further receive set of weighting coefficients spanning a further subspace being associated with the second subspace, the further subspace being orthogonal to the first subspace, the further receive set of weighting coefficients being arranged to form at least a vector comprising r coefficients. In this case, the weighter may be configured for weighting the receive signal using the further set of weighting coefficients for capturing the second subspace to extract a further captured signal comprising the second user signal, and for suppressing the first subspace to exclude the first user signal from the further captured signal. Furthermore, the extractor may be configured for extracting the first user signal from the further captured signal as has been described above.

For example, the first transmit signal is being transmitted by a first transmitter through a first communication channel and, correspondingly, the second transmit signal is being transmitted by a second transmitter through a second communication channel. In this case, the further captured signal may comprise a remaining interference of the first user signal due to a non-orthogonality of the first and second communication channel. Moreover, the first transmit signal may result from weighting the first user signal using a first transmit set of coefficients (corresponding to the set of weighting coefficients described above), and wherein the second transmit signal may result from weighting the second user signal using a second transmit set of coefficients. In other words, the first transmit signal represents a projection of the first user signal onto the first space using the first subspace using the first transmit set of coefficients and the second transmit signal representing a projection of the second user signal onto the second subspace using the second transmit set of coefficients.

The extractor may be configured in this case for weighting the extracted first user signal by the first transmit set of coefficients and by a set of channel coefficients representing the first channel to obtain an auxiliary signal, for subtracting the auxiliary signal from the receive signal to obtain a processed receive signal, wherein the weighter may be configured for weighting the processed receive signal using the further set of weighting coefficients to extract the further captured signal having reduced interferences. In other words, remaining interferences may be extracted before capturing a corresponding subspace.

For example, the extractor may be configured for bypassing the captured signal to provide the extracted first user signal when it can be assumed that the first user signal is interference-free.

In order to provide the receive set of weighting coefficients, the provider may be configured for receiving the receive set of weighting coefficients from a transmitter being configured for determining the weighting coefficients by performing e.g. the singular value decomposition scheme as has been described above. However, the inventive apparatus may itself comprise the apparatus for generating weighting coefficients in accordance with the above descriptions.

In the following, the above uplink concept will be described in more detail.

A channel model for the uplink (dual to Eqn. 1.3) is

$$y = [H_1^H \quad H_2^H \ldots \quad H_K^H] \cdot \begin{bmatrix} x_1 \\ x_2 \\ \vdots \\ x_K \end{bmatrix} + n$$

As precoding vectors we now use matrices $U_k^H$ (the transpose conjugate of $U_k$ for the downlink), i.e.

$$X_k \quad = \quad U_k^H X_k$$

At the base-station (receiver) we use the transpose conjugate of matrices $V_k$, i.e.

$$y' = \begin{bmatrix} V_1^H \\ V_2^H \\ \vdots \\ V_K^H \end{bmatrix} \cdot y$$

The decoding order is reversed with respect to the encoding order in the downlink, i.e., first, subchannel J is decoded, for which the relationship between transmit and receive signal is:

$$y'_J = \underbrace{v_{(k,i)_J}^H \cdot \sum_{j<J} H_{k(j)}^H \cdot u_{(k,i)_j} x_{k(j)}}_{=0} + v_{(k,i)_J}^H \cdot H_{k(J)}^H \cdot u_{(k,i)_J} \cdot x_{k(j)} + n$$

The first term is equal to zero as

$$u_{(k,i)_{j<J}} H_{k(j<J)} v_{(k,i)_J} = 0$$

in the downlink.

Once stream J has been detected, it is subtracted from signal y, i.e.

$$y_{new} = y_{old} - H_{k(J)}^H \cdot u_{(k,i)_J} x_{(k,i)_J}$$

and detection of the stream J-1 follows.

The computation of matrices $V_k$ and $U_k$ is done according to the algorithm presented for the downlink using the conjugate transpose of the uplink channel matrices.

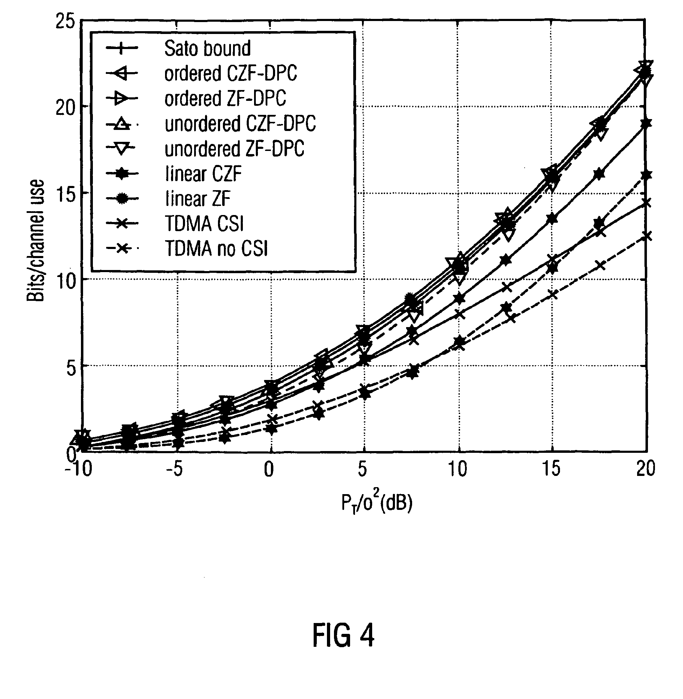

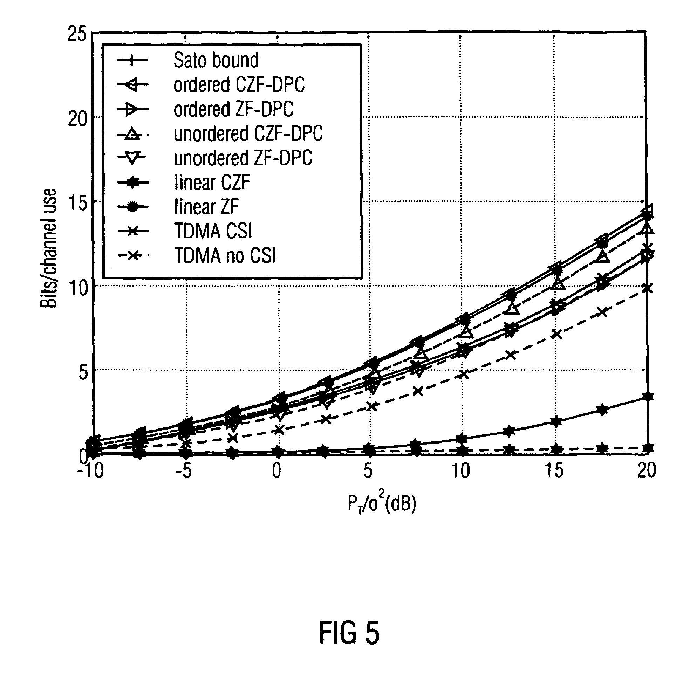

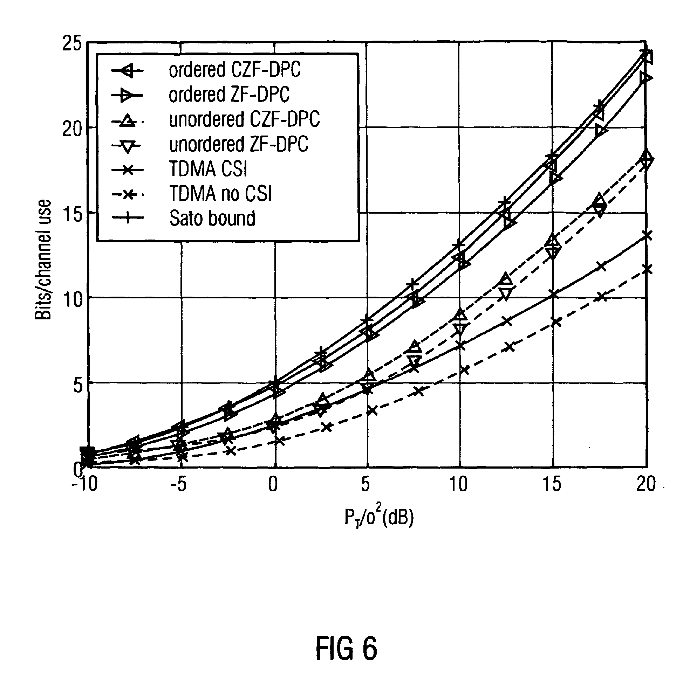

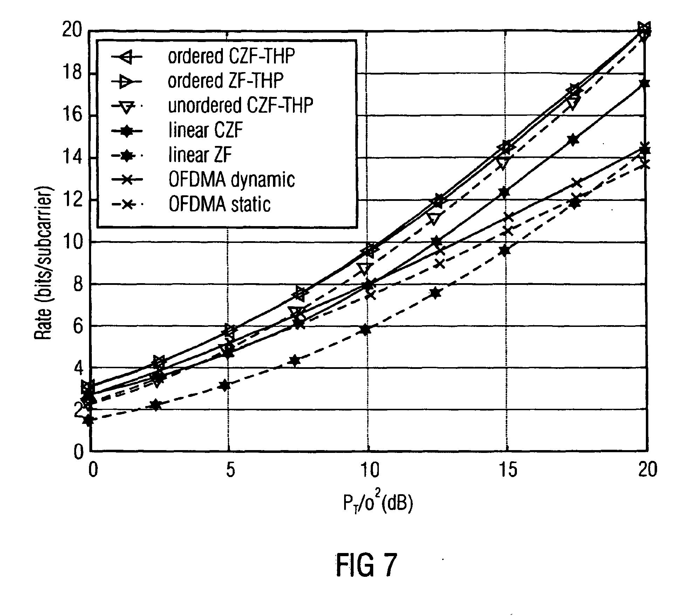

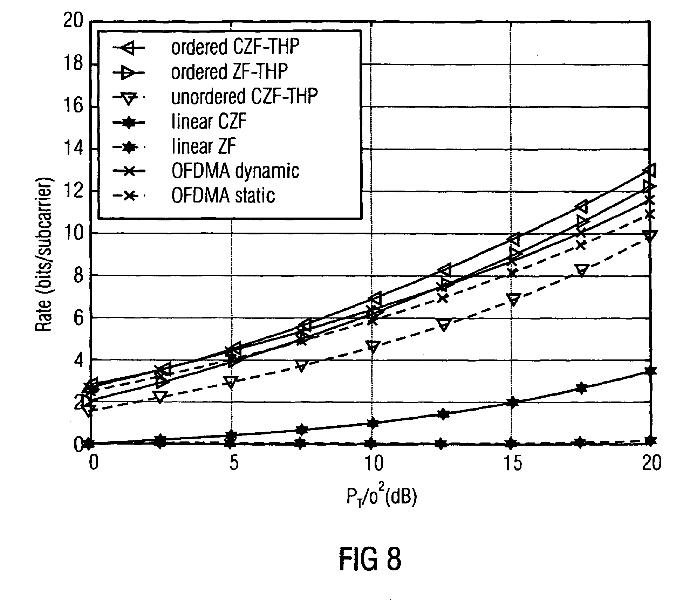

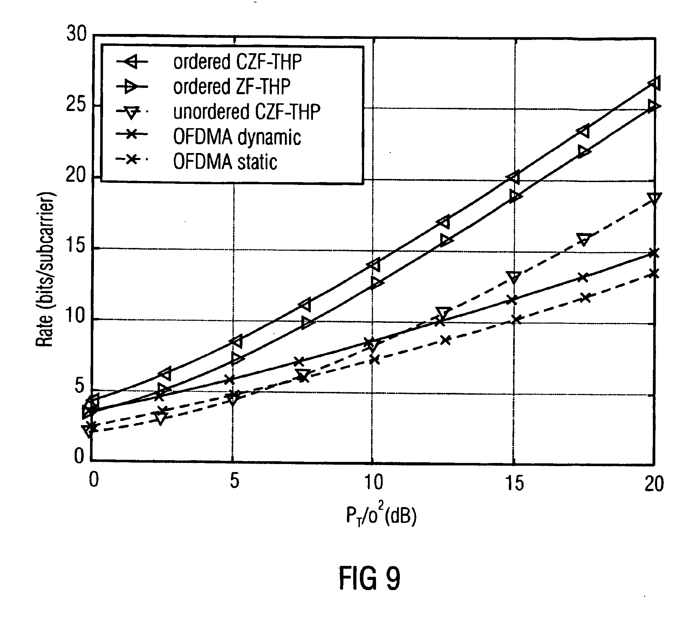

Further embodiments of the present invention will be described with respect to figures 4 to 9, wherein Fig. 4 shows the average sum capacity for a Rayleigh fading Gaussian spatially uncorrelated broadcast channel (t = 4, r = 2, K = 2), Fig. 5 shows the average sum capacity for a Rayleigh fading Gaussian spatially correlated broadcast channel (t = 4, $r_k$ = 2, K = 2), Fig. 6 shows the average sum rate for a Rayleigh fading, spatially uncorrelated Gaussian broadcast channel (t = 4, $r_k$ = 2, K = 10), Fig. 7 shows an average sum rate for a Rayleigh fading, weakly correlated Gaussian broadcast channel (t = 4, $r_k$ = 2, K = 2, SER = le - 1.), Fig. 8 describes the average sum rate for a Rayleigh fading, strongly correlated Gaussian broadcast channel (t = 4, $r_k$ = 2, K = 2, SER = le - 1.), and Fig. 9 describes the average sum rate for a Rayleigh fading, weakly correlated Gaussian broadcast channel (t = 4, $r_k$ = 2, K = 10, SER = le - 1.)

First, in Fig. 4 capacity curves are shown for a system with $t$ = 4 transmit antennas and two users with 2 antennas each. The channel has been assumed to be Rayleigh fading, spatially uncorrelated and $N$ = 1, i.e. we just have a single carrier channel. For each channel realization sum capacity is given by,

$$C = \sum_i \log\left(1 + \frac{p_i d_i}{\sigma^2}\right),$$

where $d_i^{1/2}$ are gains of the resulting subchannels, $p_i$ is the power assigned for transmission over the ith subchannel and $\sigma^2$ is the noise variance. In the dirty paper coding (DPC) based approaches capacity is computed considering the elements in the diagonal of the effective channel matrices as effective subchannel gains. Capacity is maximized by distributing the total transmit power according to a waterfilling solution over the resulting subchannels. Except for *TDMA no CSI* all other non DPC based approaches achieve a complete diagonalization of the channel. For *TDMA no CSI* capacity is given by,

$$C = \log \det \left( I + \frac{P_{\mathrm{T}} H_k H_k^{\mathrm{H}}}{t\sigma^2} \right)$$

where $P_{\mathrm{T}}$ is the total transmit power, and $H_k$ is the channel matrix of one of the users.

The algorithm described in previous sections is called ordered CZF-DPC. Unordered CZF-DPC denotes an algorithm as the one described in previous sections but without the maximum singular value criterion for the choice of the next subchannel. Instead, users are assigned dimensions in a sequential manner, i.e. after having assigned as much dimensions to user 1 as it can support, dimensions are assigned to user 2, then to user 3 and so on. Ordered ZF-DPC denotes an algorithm as the one described in previous sections but considering each channel output as a single user. These last two algorithms can be seen as particular cases of the algorithm proposed here and exhibit some novel improvements with respect to state-of-the-art algorithms, viz. the ordered ZF-DPC adds the ordering feature to the conventional unordered ZF-DPC and the unordered CZF-DPC incorporates the cooperative aspect, which is one of the novelties of our approach. The linear ZF approach consists of the inversion of the composite channel at the transmitter, the linear CZF (cooperative ZF) reduces the number of constraints by considering the cooperation possibilities of receive elements that belong to a same user. TDMA CSI randomly chooses one of the users and transmits over the singular values of its channel matrix. Finally, TDMA no CSI does not assume any channel knowledge at the transmitter. In this case one user is chosen at random and power is distributed uniformly over all antenna elements.

In Fig. 4 we observe that the capacity gain of cooperative DPC strategies with respect to non-cooperative DPC techniques is negligible. Moreover, encoding order seems to play a minor role and all curves are very close to the Sato bound of the broadcast channel, which is the theoretical upper bound on sum capacity. Linear zero forcing approaches exhibit the same slope as DPC based approaches. However, the larger number of constraints brings about significant losses. The *linear* CZF exhibits an asymptotical loss of 3 bits per channel use, and the non-cooperative approach, which is even more constrained due to suppression of interference between outputs of a same user, looses approximately 6 bits per channel use with respect to DPC techniques. Finally, the two curves belonging to TDMA approaches, in which users are not spatially multiplexed, i.e. they transmit in different time slots, show a slope that is approximately a half of the slope of multiplexing approaches and thus capacity loss becomes arbitrarily large with increasing values of SNR.

In Fig. 5 capacity curves are shown for a correlated composite channel. Now only the ordered *CZF-DPC* strategy is able to tightly approach the Sato bound of the broadcast channel. Encoding order matters since the channel energy collected by the first precoding vector, which imposes severe constraints on subsequent subchannels, is crucial for the sum capacity. Also cooperation is important. Indeed, the first precoding vector in a non-cooperative approach only collects energy from a channel vector while in the cooperative approach the first precoding vector collects energy from a channel matrix. Linear zero forcing approaches dramatically suffer from the noise-enhancement-like effect due to the many orthogonality constraints and the low rank of the channel matrix. Finally, non-multiplexing approaches show similar slopes as DPC-based approaches. This is due to the fact that now any of the single user channel matrices have almost the same rank as the composite channel itself.

Fig. 6 shows capacity curves for a spatially uncorrelated broadcast channel with four transmit antennas and ten users with two antennas each. Now, $t < r_1 + ... + r_{10}$ and therefore apart from ordering also selection of users and subchannels become important. *Ordered CZF-DPC* and ordered *ZF-DPC* simultaneously optimize the encoding order, the selection of users and the assignation of spatial dimensions to users. This translates into an asymptotic gain of approximately 7 bits with respect to DPC based zero forcing algorithms that fail to perform user selection, which can be regarded as subcarrier allocation if $N > 1$. Approaches that neither perform user selection nor spatial multiplexing, i.e. users are separated either in frequency or in time domain, lead to capacity losses with respect to the optimum approach as large as 5 bits per channel use even for relatively low SNR values. This loss increases with growing SNR.

In Figs. 7, 8, and 9 simulation results are presented for a multicarrier broadcast channel with $N = 1024$. The curves show encoded sum rates that can be obtained with each of the approaches without exceeding a symbol error rate of $10^{-1}$. For the DPC based approaches neutralization of interference is performed by using a Tomlinson-Harashima precoder (THP). Over the set of space-frequency subchannels assigned to the users, a loading technique has been applied that is based on the rate maximizing technique described in J. Cioffi, "A Multicarrier Primer" in ANSI TIE1.4 Committee Contribution, Nov. 1991. Thereby only square QAM constellations have been used and the exact number of closest neighboring points in average for a given constellation has been considered (For THP the effective constellation at the receiver has always four neighbors regardless the actual constellation employed for transmission) *OFDMA dynamic* refers to an approach that serves on each subcarrier only the user with the largest matrix norm. By contrast, *OFDMA static* does not use any criterion for the choice of users served on a particular subcarrier, i.e. it just takes one in a predefined manner. Basically, the results are in accordance with those obtained through capacity simulations. However, these curves attest the implementation capability of the procedure described using standard techniques such as THP and bit and power loading, and evidence the performance gain that such an implementation offers against other state-of-the-art approaches.

The inventive approach may be employed for performing a subchannel allocation in point to multipoint MIMO channels with perfect channel knowledge at the transmitter.

The method is very general and applies to any number of channel inputs and outputs. Combined with a dirty paper coding technique it leads to an effective diagonalization of the channel over which loading techniques can easily be applied. The algorithm provides precoding vectors, weighting vectors and encoding order that achieve a sum capacity of the system close to the theoretical limit. In a multicarrier system the ordering capability of the method provides simultaneously a criterion on how to assign users to subcarriers. For most channel scenarios and signal-to-noise ratios the sum rate achieved by the method is well above the sum rates achieved by state-of-the-art methods such as linear zero forcing approaches, ZF-DPC without ordering or non multiplexing approaches such as TDMA or OFDMA. Also novel are "degraded" particular cases of this algorithm such as ZF-DPC with ordering, which is basically the same algorithm but where each channel output is considered as a different user, and CZF-DPC without ordering, in which the criterion for the assignment of the next subchannel is ignored and the choice is made at random.

The invention provides an approach for subchannel allocation in multicarrier point to multipoint communication systems (multi-user downlink) where the individual communication link is supported by multiple antennas both at the access point (Tx) and the receiver unit (Rx).

A generation of subchannels to users in a multi-user scenario is proposed which is based on singular vectors of the preconditioned transmission channel where the preconditioning depends on the interference suppression for users which have already been considered in a previous step of the overall iterative allocation of subcannels to users. The amount of interference to users, which is not yet considered by the preconditioning, is taken into account by well-known successive encoding techniques (dirty paper coding and implementable versions thereof) when data is to be transmitted through the allocated subchannels.

An important feature of the proposed algorithms comes into play in a multi-carrier system where the algorithm can be executed on each subcarrier simultaneously. In this case the extra degree of freedom in frequency domain makes the proposed approach widely independent from number of users and overall number of receive antennas. After the allocation of subchannels in spatial and frequency domain any known loading technique can be performed consequently. The ordering of subchannel allocation and the resulting successive encoding and preconditioning strategy can be combined with any further scheduling strategy based on criteria from higher protocol layers.

The properties of the inventive approach are the following:

- successive encoding in combination with the diagonalization of (preconditioned) transmission channels in spatial domain and the ordering criterion

- successive encoding in combination with the diagonalization of (preconditioned) transmission channels in any multiple input multiple output system where a cross talk between subchannels is experienced

- independence from number of users and overall number of receive antennas by exploiting the diversity between subcarriers of a multicarrier system

- independence from number of users and overall number of receive antennas by exploiting the diversity between subcarriers of multiple spreading codes, time slots, and frequency bands

- alternative encoding ordering based on further scheduling strategies.

In addition, all apparatuses described above may be configured for iteratively determining eigenvectors and/or subspaces in the eigenvector mode and/or in the subspace mode.

Furthermore, the inventive features being described with respect to different embodiments can be combined with each other, In addition, inventive features described with respect an embodiment may comprise all features of corresponding features of any other embodiment.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

**Claims**

1. Apparatus for iteratively generating a first set of weighting coefficients and for iteratively generating a second set of weighting coefficients, the first set of weighting coefficients to be used for weighting a first user signal associated with a first user to obtain a first transmit signal, the second set of weighting coefficients to be used for weighting a second user signal to obtain a second transmit signal, when performing a subchannel allocation in a multicarrier point to multipoint MIMO communication system, the apparatus comprising:

   means for calculating m eigenvectors spanning a first subspace of a space, m being equal to or greater than 1, the m eigenvectors forming the first set of weighting coefficients for the first user, and for calculating n eigenvectors spanning a second subspace of a further space, the second subspace being orthogonal to the first subspace, n being equal to or greater than 1, the n eigenvectors forming the second set of coefficients for the second user, such that the first transmit signal represents a projection of the first user signal onto the first subspace and the second transmit signal represents a projection of the second user signal onto the second subspace,

   wherein the means for calculating comprises the following features:

   a weighter (101) configured for weighting a first channel matrix representing a first channel being associated with the first user using a set of projection coefficients spanning a projection subspace to obtain a projected first channel matrix representing a projection of the first channel matrix onto the projection subspace, or for weighting a second channel matrix representing a second channel being associated with the second user using a set of projection coefficients spanning a projection subspace to obtain a projected second channel matrix representing a projection of the second channel matrix onto the projection subspace;
   a subspace decomposer (103) configured for performing a singular value decomposition of the projected first channel matrix to obtain a first plurality of eigenvectors associated with eigenvalues, or for performing a singular value decomposition of the second projected channel matrix to obtain a second plurality of eigenvectors associated with eigenvalues;
   a selector (105) configured for selecting s eigenvectors from the first plurality of eigenvectors, s being equal to or greater than zero and equal to or smaller than m, or for selecting s eigenvectors from the second plurality of eigenvectors, s being equal to or greater than zero and equal to or smaller than n;
   a subspace excluder (107) configured for subtracting a subspace spanned by the s eigenvectors from the projection subspace spanned by the set of projecting coefficients to obtain a reduced projection subspace to be used as a projection subspace in a further iteration.

2. Apparatus according to claim 1, wherein the weighter (101) is configured for weighting the first channel matrix and the second channel matrix using the same set of projection coefficients to obtain the projected first and second channel matrices representing, respectively, a projection of the first and second channel matrices onto the same projection subspace;
   wherein the subspace decomposer (103) is configured for performing a singular value decomposition of the projected first and second channel matrices to obtain a plurality of eigenvectors associated with eigenvalues, the plurality of eigenvectors comprising the first and the second plurality of eigenvectors, and
   wherein the selector (105) is configured for selecting the s eigenvectors in dependence on a transmission property associated with transmitting the first or the second transmit signal.

3. Apparatus according to claim 2, wherein the selector (105) is configured for selecting a certain eigenvalue from the plurality of eigenvalues, the certain eigenvalue being associated with the transmission property, for selecting an eigenvector associated with certain eigenvalues, and for selecting s-1 eigenvectors associated with the user, which is associated with the certain eigenvalue, to obtain the s eigenvectors.

4. Apparatus according to claims 1 to 3, wherein the subspace excluder (107) is configured for determining a set of subspace coefficients representing the subspace using the s eigenvectors, and for subtracting the set of subspace coefficients from the set of projection coefficients to obtain updated projection coefficients representing the reduced projection subspace;

wherein the weighter (101) is configured for weighting the first channel matrix and the second channel matrix using the updated projection coefficients to obtain an updated projected first channel matrix representing a projection of the first channel matrix onto the reduced projection subspace, and to obtain an updated projected second channel matrix representing a projection of the second channel matrix onto the reduced projection subspace;

wherein the subspace decomposer (103) is configured for performing a singular value decomposition of the updated projected first and second channel matrices to obtain a plurality of eigenvectors associated with eigenvalues, and wherein the selector (105) is configured for selecting s further eigenvectors associated with the first user from the plurality of eigenvectors, s being equal to or greater than zero and equal to or smaller than m, or

for selecting s further eigenvectors associated with the second user from the plurality of eigenvectors, s being equal to or greater than zero and equal to or smaller than n, wherein a subspace spans by the s further eigenvectors is orthogonal to a subspace spanned by eigenvectors provided in a previous iteration, and

wherein the subspace excluder (107) is configured for subtracting a subspace spanned by the s further eigenvectors from the reduced projection subspace to obtain a further projection subspace to be used as a projection subspace in a further iteration.

5. Apparatus according to claims 1 to 4, wherein

the weighter (101) is configured for weighting the first channel matrix using a first set of projecting coefficients to obtain a projected first channel matrix, the first set of projecting coefficients spanning a projection subspace, the projected first channel matrix representing a projection of the first channel matrix onto the projection subspace;

wherein the subspace decomposer (103) is configured for performing a singular value decomposition of the projected first channel matrix to provide a plurality of eigenvalues associated with eigenvectors;

wherein the selector (105) is configured for selecting m eigenvalues from the plurality of eigenvalues, m being equal to or greater than 1, and for providing m eigenvectors associated with the m eigenvalues as the first set of weighting coefficients, the m eigenvectors spanning the first subspace;

wherein the subspace excluder (107) is configured for providing a second set of projection coefficients spanning a reduced projection subspace, the subspace excluder (107) being configured for excluding the first subspace from the projection subspace to obtain the reduced projection subspace being spanned by the second set of projection coefficients;

wherein the weighter (101) is configured for weighting a second channel matrix representing a second channel being associated with the second user using the second set of projecting coefficients to obtain a projected second channel matrix, the projected second channel matrix representing a projection of the second channel matrix onto the reduced projection subspace;

wherein the subspace decomposer (103) is configured for performing a singular value decomposition of the projected second channel matrix to obtain a further plurality of eigenvalues associated with eigenvectors; and

wherein the selector (105) is configured for selecting n eigenvalues from the further plurality of eigenvalues, n being equal to or greater than 1, and for providing n eigenvectors associated with the n eigenvalues as the second set of weighting coefficients, the n eigenvectors spanning the second subspace.

6. Apparatus according to claim 5, wherein the first transmit signal is to be transmitted by t transmitting points and received by r receiving points, wherein the subspace decomposer (103) is configured for providing the plurality of eigenvectors being arranged to form a first eigenvector matrix and a second eigenvector matrix, the eigenvectors of the first eigenvector matrix having t coefficients, the eigenvectors of the second eigenvector matrix having r coefficients.

7. Apparatus according to claim 5 or 6, wherein the selector (105) is configured for selecting the m eigenvalues from the plurality of eigenvalues and for selecting the n eigenvalues from the further plurality of eigenvalues in dependence on a transmission property associated with transmitting the first transmit signal or with transmitting the second transmit signal.

8. Apparatus according to claims 1 to 9, wherein the transmission property comprises maximizing a data rate of the first user signal, maximizing a data rate of the second user signal maximizing a data rate of the first user signal for a certain data rate of the second user signal, jointly maximizing the data rate of the first user signal and the second user signal, minimizing a transmission delay associated with transmitting the first user signal, jointly minimizing a transmission delay associated with simultaneously transmitting the first user signal and the second user signal, quality of service requirements associated with transmitting the first user signal or the second user signal or attenuation of the first user signal or of the second user signal during transmission.

9. Apparatus according to claims 1 to 8, wherein the subspace excluder (107) is configured for generating a set of coefficients comprising coefficients spanning the first subspace, and for subtracting the set of coefficients from the first set of projection coefficients to provide the second set of projection coefficients.

10. Apparatus according to claims 1 to 9, wherein the set of projection coefficients is arranged to form a matrix, and wherein the weighter (101) is configured for performing a matrix-by-matrix multiplication to obtain the projected first or second channel matrix.

11. Apparatus according to claims 1 to 9, further comprising an eigenvalue analyzer configured for analysing eigenvalue properties.

12. Apparatus according to claims 1 to 11, wherein the first user signal is associated with a subcarrier at a certain frequency, wherein the second user signal is associated with a subcarrier at the certain frequency, wherein the means for calculating is configured for calculating the first and the second set of weighting coefficients for the certain frequency, such that the first transmit signal and the second transmit signal are signals at the certain frequency.

13. Apparatus according to claim 12, the apparatus being further configured for generating a further first set of weighting coefficients at a further certain frequency to be used for weighting a further first user signal associated with the first user and the further certain frequency to obtain a further first transmit signal at the further certain frequency, and for generating a further second set of weighting coefficients at the further certain frequency to be used for weighting a further second user signal associated with the second user and the further certain frequency to obtain a further second transmit signal at the further certain frequency, wherein the means for calculating is configured for calculating p eigenvectors spanning a further first subspace of another space at the further certain frequency, p being equal to or greater than 1, the p eigenvectors forming the further first set of coefficients for the first user, and for calculating q eigenvectors spanning a second subspace of another further space at the further certain frequency, the q eigenvectors forming the further second set of weighting coefficients, q being equal to or greater than 1, the other further subspace being orthogonal to the other subspace.

14. Method for iteratively generating a first set of weighting coefficients and for iteratively generating a second set of weighting coefficients, the first set of weighting coefficients to be used for weighting a first user signal associated with a first user to obtain a first transmit signal, the second set of weighting coefficients to be used for weighting a second user signal to obtain a second transmit signal, when performing a subchannel allocation in a multicarrier point to multipoint MIMO communication system, the method comprising:

calculating m eigenvectors spanning a first subspace of a space, m being equal to or greater than 1, the m eigenvectors forming the first set of weighting coefficients for the first user, and calculating n eigenvectors spanning a second subspace of a further space, the second subspace being orthogonal to the first subspace, n being equal to or greater than 1, the n eigenvectors forming the second set of coefficients for the second user, such that the first transmit signal represents a projection of the first user signal onto the first subspace and the second transmit signal represents a projection of the second user signal onto the second subspace,

wherein the step of calculating comprises the following sub-steps:

weighting a first channel matrix representing a first channel being associated with the first user using a set of projection coefficients spanning a projection subspace to obtain a projected first channel matrix representing a projection of the first channel matrix onto the projection subspace, or for weighting a second channel matrix representing a second channel being associated with the second user using a set of projection coefficients spanning a projection subspace to obtain a projected second channel matrix representing a projection of the second channel matrix onto the projection subspace; performing a singular value decomposition of the projected first channel matrix to obtain a first plurality of eigenvectors associated with eigenvalues, or for performing a singular value decomposition of the second projected channel matrix to obtain a second plurality of eigenvectors associated with eigenvalues; selecting s eigenvectors from the first plurality of eigenvectors, s being equal to or greater than zero and equal to or smaller than m, or for selecting s eigenvectors from the second plurality of eigenvectors, s being equal to or greater than zero and equal to or smaller than n;

subtracting a subspace spanned by the s eigenvectors from the projection subspace spanned by the set of projecting coefficients to obtain a reduced projection subspace to be used as a projection subspace in a further iteration.

15. Computer program comprising means for performing the steps of the method according to claim 14, when the computer program runs on a computer.

**Patentansprüche**

1. Vorrichtung zum iterativen Erzeugen eines ersten Satzes von Gewichtungskoeffizienten und zum iterativen Erzeugen eines zweiten Satzes von Gewichtungskoeffizienten, wobei der erste Satz von Gewichtungskoeffizienten zum Gewichten eines ersten Benutzersignals, das einem ersten Benutzer zugeordnet ist, verwendet werden soll, um ein erstes Übertragungssignal zu erhalten, und wobei der zweite Satz von Gewichtungskoeffizienten zum Gewichten eines zweiten Benutzersignals verwendet werden soll, um ein zweites Übertragungssignal zu erhalten, wenn eine Unterkanalzuteilung bei einem Mehrträgerpunkt-zu-Mehrpunkt-MIMO-Kommunikationssystem durchgeführt wird, wobei die Vorrichtung folgende Merkmale aufweist:

eine Einrichtung zum Berechnen von m Eigenvektoren, die einen ersten Unterraum eines Raums überspannen, wobei m gleich oder größer als 1 ist, wobei die m Eigenvektoren den ersten Satz von Gewichtungskoeffizienten für den ersten Benutzer bilden, und zum Berechnen von n Eigenvektoren, die einen zweiten Unterraum eines weiteren Raums überspannen, wobei der zweite Unterraum orthogonal zu dem ersten Unterraum ist, wobei n gleich oder größer als 1 ist, wobei die n Eigenvektoren den zweiten Satz von Koeffizienten für den zweiten Benutzer bilden, so dass das erste Übertragungssignal eine Projektion des ersten Benutzersignals auf den ersten Unterraum darstellt und das zweite Übertragungssignal eine Projektion des zweiten Benutzersignals auf den zweiten Unterraum darstellt,

wobei die Einrichtung zum Berechnen folgende Merkmale aufweist:

einen Gewichter (101), der zum Gewichten einer ersten Kanalmatrix, die einen ersten Kanal darstellt, der dem ersten Benutzer zugeordnet ist, unter Verwendung eines Satzes von Projektionskoeffizienten, die einen Projektionsunterraum überspannen, um eine projizierte erste Kanalmatrix zu erhalten, die eine Projektion der ersten Kanalmatrix auf den Projektionsunterraum darstellt, oder zum Gewichten einer zweiten Kanalmatrix, die einen zweiten Kanal darstellt, der dem zweiten Benutzer zugeordnet ist, unter Verwendung eines Satzes von Projektionskoeffizienten, die einen Projektionsunterraum überspannen, um eine projizierte zweite Kanalmatrix zu erhalten, die eine Projektion der zweiten Kanalmatrix auf den Projektionsunterraum darstellt, konfiguriert ist; einen Unterraumzergliederer (103), der zum Durchführen einer Singulärwertzergliederung der projizierten ersten Kanalmatrix, um eine erste Mehrzahl von Eigenvektoren zu erhalten, die Eigenwerten zugeordnet sind, oder zum Durchführen einer Singulärwertzergliederung der zweiten projizierten Kanalmatrix, um eine zweite Mehrzahl von Eigenvektoren zu erhalten, die Eigenwerten zugeordnet sind, konfiguriert ist; einen Selektor (105), der zum Auswählen von s Eigenvektoren aus der ersten Mehrzahl von Eigenvektoren, wobei s gleich oder größer als 0 und gleich oder kleiner als m ist, oder zum Auswählen von s Eigenvektoren aus der zweiten Mehrzahl von Eigenvektoren, wobei s gleich oder größer als Null und gleich oder kleiner als n ist, konfiguriert ist; einen Unterraumausschließer (107), der zum Subtrahieren eines Unterraums konfiguriert ist, der durch die s Eigenvektoren überspannt ist, von dem Projektionsunterraum, der durch den Satz von projizierenden Koeffizienten überspannt ist, um einen verringerten Projektionsunterraum zu erhalten, der als ein Projektionsunterraum bei einer weiteren Iteration verwendet werden soll.

2. Vorrichtung gemäß Anspruch 1, bei der der Gewichter (101) zum Gewichten der ersten Kanalmatrix und der zweiten Kanalmatrix unter Verwendung desselben Satzes von Projektionskoeffizienten konfiguriert ist, um die projizierte erste und zweite Kanalmatrix zu erhalten, die eine Projektion der ersten Kanalmatrix bzw. der zweiten Kanalmatrix auf denselben Projektionsunterraum darstellen; wobei der Unterraumzergliederer (103) zum Durchführen einer Singulärwertzergliederung der projizierten ersten und zweiten Kanalmatrix konfiguriert ist, um eine Mehrzahl von Eigenvektoren zu erhalten, die Eigenwerten zugeordnet sind, wobei die Mehrzahl von Eigenvektoren die erste und die zweite Mehrzahl von Eigenvektoren aufweist, und wobei der Selektor (105) zum Auswählen der s Eigenvektoren in Abhängigkeit von einer Übertragungseigenschaft, die einem Übertragen des ersten oder des zweiten Übertragungssignals zugeordnet ist, konfiguriert ist.

3. Vorrichtung gemäß Anspruch 2, bei der der Selektor (105) zum Auswählen eines bestimmten Eigenwerts aus der Mehrzahl von Eigenwerten, wobei der bestimmte Eigenwert der Übertragungseigenschaft zugeordnet ist, zum Auswählen eines Eigenvektors, der bestimmten Eigenwerten zugeordnet ist, und zum Auswählen von s-1 Eigenvektoren, die dem Benutzer zugeordnet sind, welcher dem bestimmten Eigenwert zugeordnet ist, konfiguriert ist, um die s Eigenvektoren zu erhalten.

4. Vorrichtung gemäß einem der Ansprüche 1 bis 3, bei der der Unterraumausschließer (107) zum Bestimmen eines Satzes von Unterraumkoeffizienten, die den Unterraum unter Verwendung der s Eigenvektoren darstellen, und zum Subtrahieren des Satzes von Unterraumkoeffizienten von dem Satz von Projektionskoeffizienten konfiguriert ist, um aktualisierte Projektionskoeffizienten zu erhalten, die den verringerten Projektionsunterraum darstellen;
wobei der Gewichter (101) zum Gewichten der ersten Kanalmatrix und der zweiten Kanalmatrix unter Verwendung der aktualisierten Projektionskoeffizienten, um eine aktualisierte projizierte erste Kanalmatrix zu erhalten, die eine Projektion der ersten Kanalmatrix auf den verringerten Projektionsunterraum darstellt, und zum Erhalten einer aktualisierten projizierten zweiten Kanalmatrix, die eine Projektion der zweiten Kanalmatrix auf den verringerten Projektionsunterraum darstellt, konfiguriert ist;
wobei der Unterraumzergliederer (103) zum Durchführen einer Singulärwertzergliederung der aktualisierten projizierten ersten Kanalmatrix und der aktualisierten projizierten zweiten Kanalmatrix, um eine Mehrzahl von Eigenvektoren zu erhalten, die Eigenwerten zugeordnet sind, konfiguriert ist, und wobei der Selektor (105) zum Auswählen von s weiteren Eigenvektoren konfiguriert ist, die dem ersten Benutzer zugeordnet sind, aus der Mehrzahl von Eigenvektoren, wobei s gleich oder größer als Null und gleich oder kleiner als m ist, oder
zum Auswählen von s weiteren Eigenvektoren, die dem zweiten Benutzer zugeordnet sind, aus der Mehrzahl von Eigenvektoren, wobei s gleich oder größer als Null und gleich oder kleiner als n ist, und wobei ein Unterraum, der durch die s weiteren Eigenvektoren überspannt ist, orthogonal zu einem Unterraum angeordnet ist, der durch Eigenvektoren überspannt ist, die bei einer vorherigen Iteration bereitgestellt wurden, und
wobei der Unterraumausschließer (107) zum Subtrahieren eines Unterraums, der durch die s weiteren Eigenvektoren überspannt ist, von dem verringerten Projektionsunterraum, konfiguriert ist, um einen weiteren Projektionsunterraum zu erhalten, der als ein Projektionsunterraum bei einer weiteren Iteration verwendet werden soll.

5. Vorrichtung gemäß einem der Ansprüche 1 bis 4, bei der
der Gewichter (101) zum Gewichten der ersten Kanalmatrix unter Verwendung eines ersten Satzes von projizierenden Koeffizienten konfiguriert ist, um eine projizierte erste Kanalmatrix zu erhalten, wobei der erste Satz von projizierenden Koeffizienten einen Projektionsunterraum überspannt, wobei die projizierte erste Kanalmatrix eine Projektion der ersten Kanalmatrix auf den Projektionsunterraum darstellt;
wobei der Unterraumzergliederer (103) zum Durchführen einer Singulärwertzergliederung der projizierten ersten Kanalmatrix konfiguriert ist, um eine Mehrzahl von Eigenwerten bereitzustellen, die Eigenvektoren zugeordnet sind;
wobei der Selektor (105) zum Auswählen von m Eigenwerten aus der Mehrzahl von Eigenwerten, wobei m gleich oder größer als 1 ist, und zum Bereitstellen von m Eigenvektoren, die den m Eigenwerten zugeordnet sind, als ersten Satz von Gewichtungskoeffizienten, konfiguriert ist, wobei die m Eigenvektoren den ersten Unterraum überspannen;
wobei der Unterraumausschließer (107) zum Bereitstellen eines zweiten Satzes von Projektionskoeffizienten, die einen verringerten Projektionsunterraum überspannen, konfiguriert ist, wobei der Unterraumausschließer (107) zum Ausschließen des ersten Unterraums aus dem Projektionsunterraum konfiguriert ist, um den verringerten Projektionsunterraum zu erhalten, der durch den zweiten Satz von Projektionskoeffizienten überspannt ist;
wobei der Gewichter (101) zum Gewichten einer zweiten Kanalmatrix, die einen zweiten Kanal darstellt, der dem zweiten Benutzer zugeordnet ist, unter Verwendung des zweiten Satzes von projizierenden Koeffizienten, konfiguriert ist, um eine projizierte zweite Kanalmatrix zu erhalten, wobei die projizierte zweite Kanalmatrix eine Projektion der zweiten Kanalmatrix auf den verringerten Projektionsunterraum darstellt;
wobei der Unterraumzergliederer (103) zum Durchführen einer Singulärwertzergliederung der projizierten zweiten Kanalmatrix konfiguriert ist, um eine weitere Mehrzahl von Eigenwerten zu erhalten, die Eigenvektoren zugeordnet sind; und
wobei der Selektor (105) zum Auswählen von n Eigenwerten aus der weiteren Mehrzahl von Eigenwerten, wobei n gleich oder größer als 1 ist, und zum Bereitstellen von n Eigenvektoren, die den n Eigenwerten zugeordnet sind, als den zweiten Satz von Gewichtungskoeffizienten, wobei die n Eigenvektoren den zweiten Unterraum überspannen, konfiguriert ist.

6. Vorrichtung gemäß Anspruch 5, bei der das erste Übertragungssignal durch t Übertragungspunkte übertragen und durch r Empfangspunkte empfangen werden soll, wobei der Unterraumzergliederer (103) zum Bereitstellen der Mehrzahl von Eigenvektoren konfiguriert ist, die angeordnet sind, um eine erste Eigenvektormatrix und eine zweite Eigenvektormatrix zu bilden, wobei die Eigenvektoren der ersten Eigenvektormatrix t Koeffizienten aufweisen und die Eigenvektoren der zweiten Eigenvektormatrix r Koeffizienten aufweisen.

7. Vorrichtung gemäß Anspruch 5 oder 6, bei der der Selektor (105) zum Auswählen der m Eigenwerte aus der Mehrzahl von Eigenwerten und zum Auswählen der n Eigenwerte aus der weiteren Mehrzahl von Eigenwerten in Abhängigkeit von einer Übertragungseigenschaft, die einem Übertragen des ersten Übertragungssignals oder einem Übertragen des zweiten Übertragungssignals zugeordnet ist, konfiguriert ist.

8. Vorrichtung gemäß einem der Ansprüche 1 bis 9, bei der die Übertragungseigenschaft Folgendes aufweist: ein Maximieren einer Datenrate des ersten Benutzersignals, ein Maximieren einer Datenrate des zweiten Benutzersignals, ein Maximieren einer Datenrate des ersten Benutzersignals für eine bestimmte Datenrate des zweiten Benutzersignals, ein gemeinsames Maximieren der Datenrate des ersten Benutzersignals und des zweiten Benutzersignals, ein Minimieren einer Übertragungsverzögerung, die einem Übertragen des ersten Benutzersignals zugeordnet ist, ein gemeinsames Minimieren einer Übergangsverzögerung, die einem gleichzeitigen Übertragen des ersten Benutzersignals und des zweiten Benutzersignals zugeordnet ist, Dienstqualitätsanforderungen, die einem Übertragen des ersten Benutzersignals oder des zweiten Benutzersignals oder Dämpfung des ersten Benutzersignals oder des zweiten Benutzersignals während einer Übertragung zugeordnet sind.

9. Vorrichtung gemäß einem der Ansprüche 1 bis 8, bei der der Unterraumausschließer (107) zum Erzeugen eines Satzes von Koeffizienten, der Koeffizienten aufweist, die den ersten Unterraum überspannen, und zum Subtrahieren des Satzes von Koeffizienten von dem ersten Satz von Projektionskoeffizienten, um den zweiten Satz von Projektionskoeffizienten bereitzustellen, konfiguriert ist.

10. Vorrichtung gemäß einem der Ansprüche 1 bis 9, bei der der Satz von Projektionskoeffizienten angeordnet ist, um eine Matrix zu bilden, und bei der der Gewichter (101) zum Durchführen einer matrixweisen Multiplikation konfiguriert ist, um die projizierte erste oder zweite Kanalmatrix zu erhalten.

11. Vorrichtung gemäß einem der Ansprüche 1 bis 9, die ferner einen Eigenwertanalysator aufweist, der zum Analysieren von Eigenwerteigenschaften konfiguriert ist.

12. Vorrichtung gemäß einem der Ansprüche 1 bis 11, bei der das erste Benutzersignal einem Unterträger bei einer bestimmten Frequenz zugeordnet ist, bei der das zweite Benutzersignal einem Unterträger bei der bestimmten Frequenz zugeordnet ist, wobei die Einrichtung zum Berechnen für ein Berechnen des ersten und des zweiten Satzes von Gewichtungskoeffizienten für die bestimmte Frequenz konfiguriert ist, derart, dass das erste Übertragungssignal und das zweite Übertragungssignal Signale bei der bestimmten Frequenz sind.

13. Vorrichtung gemäß Anspruch 12, wobei die Vorrichtung ferner zum Erzeugen eines weiteren ersten Satzes von Gewichtungskoeffizienten bei einer weiteren bestimmten Frequenz, der zum Gewichten eines weiteren ersten Benutzersignals, das dem ersten Benutzer und der weiteren bestimmten Frequenz zugeordnet ist, um ein weiteres erstes Übertragungssignal bei der weiteren bestimmten Frequenz zu erhalten, und zum Erzeugen eines weiteren zweiten Satzes von Gewichtungskoeffizienten bei der weiteren bestimmten Frequenz, der zum Gewichten eines weiteren zweiten Benutzersignals, das dem zweiten Benutzer und der weiteren bestimmten Frequenz zugeordnet ist, um ein weiteres zweites Übertragungssignal bei der weiteren bestimmten Frequenz zu erhalten, konfiguriert ist, wobei die Einrichtung zum Berechnen für ein Berechnen von p Eigenvektoren, die einen weiteren ersten Unterraum eines anderen Raums bei der weiteren bestimmten Frequenz überspannen, wobei p gleich oder größer als 1 ist und die p Eigenvektoren den weiteren ersten Satz von Koeffizienten für den ersten Benutzer bilden, und zum Berechnen von q Eigenvektoren, die einen zweiten Unterraum eines anderen weiteren Raums bei der weiteren bestimmten Frequenz überspannen, wobei die q Eigenvektoren den weiteren zweiten Satz von Gewichtungskoeffizienten bilden, wobei q gleich oder größer als 1 ist, und wobei der andere weitere Unterraum orthogonal zu dem anderen Unterraum angeordnet ist, konfiguriert ist.

14. Verfahren zum iterativen Erzeugen eines ersten Satzes von Gewichtungskoeffizienten und zum iterativen Erzeugen eines zweiten Satzes von Gewichtungskoeffizienten, wobei der erste Satz von Gewichtungskoeffizienten zum Gewichten eines ersten Benutzersignals, das einem ersten Benutzer zugeordnet ist, verwendet werden soll, um ein erstes Übertragungssignal zu erhalten, und wobei der zweite Satz von Gewichtungskoeffizienten zum Gewichten eines zweiten Benutzersignals verwendet werden soll, um ein zweites Übertragungssignal zu erhalten, wenn eine Unterkanalzuteilung bei einem Mehrträgerpunkt-zu-Mehrpunkt-MIMO-Kommunikationssystem durchgeführt wird, wobei das Verfahren folgende Schritte aufweist:

Berechnen von m Eigenvektoren, die einen ersten Unterraum eines Raums überspannen, wobei m gleich oder größer als 1 ist, wobei die m Eigenvektoren den ersten Satz von Gewichtungskoeffizienten für den ersten Benutzer bilden, und Berechnen von n Eigenvektoren, die einen zweiten Unterraum eines weiteren Raums überspannen, wobei der zweite Unterraum orthogonal zu dem ersten Unterraum ist, wobei n gleich oder größer als 1 ist, wobei die n Eigenvektoren den zweiten Satz von Koeffizienten für den zweiten Benutzer bilden, so dass das erste Übertragungssignal eine Projektion des ersten Benutzersignals auf den ersten Unterraum darstellt und das zweite Übertragungssignal eine Projektion des zweiten Benutzersignals auf den zweiten Unterraum darstellt,

wobei der Schritt eines Berechnens folgende Unterschritte aufweist:

Gewichten einer ersten Kanalmatrix, die einen ersten Kanal darstellt, der dem ersten Benutzer zugeordnet ist, unter Verwendung eines Satzes von Projektionskoeffizienten, die einen Projektionsunterraum überspannen, um eine projizierte erste Kanalmatrix zu erhalten, die eine Projektion der ersten Kanalmatrix auf den Projektionsunterraum darstellt, oder Gewichten einer zweiten Kanalmatrix, die einen zweiten Kanal darstellt, der dem zweiten Benutzer zugeordnet ist, unter Verwendung eines Satzes von Projektionskoeffizienten, die einen Projektionsunterraum überspannen, um eine projizierte zweite Kanalmatrix zu erhalten, die eine Projektion der zweiten Kanalmatrix auf den Projektionsunterraum darstellt;
Durchführen einer Singulärwertzergliederung der projizierten ersten Kanalmatrix, um eine erste Mehrzahl von Eigenvektoren zu erhalten, die Eigenwerten zugeordnet sind, oder Durchführen einer Singulärwertzergliederung der zweiten projizierten Kanalmatrix, um eine zweite Mehrzahl von Eigenvektoren zu erhalten, die Eigenwerten zugeordnet sind;
Auswählen von s Eigenvektoren aus der ersten Mehrzahl von Eigenvektoren, wobei s gleich oder größer als Null und gleich oder kleiner als m ist, oder Auswählen von s Eigenvektoren aus der zweiten Mehrzahl von Eigenvektoren, wobei s gleich oder größer als Null und gleich oder kleiner als n ist;
Subtrahieren eines Unterraums, der durch die s Eigenvektoren überspannt ist, von dem Projektionsunterraum, der durch den Satz von projizierenden Koeffizienten überspannt ist, um einen verringerten Projektionsunterraum zu erhalten, der als ein Projektionsunterraum bei einer weiteren Iteration verwendet werden soll.

**15.** Computerprogramm, das eine Einrichtung zum Durchführen der Schritte des Verfahrens gemäß Anspruch 14 aufweist, wenn das Computerprogramm auf einem Computer läuft.

## Revendications

**1.** Appareil pour générer de manière itérative un premier ensemble de coefficients de pondération et pour générer de manière itérative un deuxième ensemble de coefficients de pondération, le premier ensemble de coefficients de pondération étant à utiliser pour pondérer un premier signal d'utilisateur associé à un premier utilisateur, pour obtenir un premier signal de transmission, le deuxième ensemble de coefficients de pondération étant à utiliser pour pondérer un deuxième signal d'utilisateur, pour obtenir un deuxième signal de transmission, lors de la réalisation d'une attribution de sous-canal dans un système de communication MIMO à plusieurs porteuses d'un point vers des points multiples, l'appareil comprenant :

un moyen destiné à calculer m vecteurs propres couvrant un premier sous-espace d'un espace, m étant égal ou supérieur à 1, les m vecteurs propres formant le premier ensemble de coefficients de pondération pour le premier utilisateur, et à calculer n vecteurs propres couvrant un deuxième sous-espace d'un autre espace, le deuxième sous-espace étant orthogonal au premier sous-espace, n étant égal ou supérieur à 1, les n vecteurs propres formant le deuxième ensemble de coefficients pour le deuxième utilisateur, de sorte que le premier signal de transmission représente une projection du premier signal d'utilisateur sur le premier sous-espace et le deuxième signal de transmission représente une projection du deuxième signal d'utilisateur sur le deuxième sous-espace,

dans lequel le moyen destiné à calculer comprend les caractéristiques suivantes :

un moyen de pondération (101) configuré pour pondérer une première matrice de canal représentant un premier canal associé au premier utilisateur par un ensemble de coefficients de projection couvrant un sous-espace de projection, pour obtenir une première matrice de canal projetée représentant une projection de la première matrice de canal sur le sous-espace de projection, ou pour pondérer une deuxième matrice de canal représentant un deuxième canal associé au deuxième utilisateur par un ensemble de coefficients de projection couvrant un sous-espace de projection, pour obtenir une deuxième matrice de canal projetée représentant une projection de la deuxième matrice de canal sur le sous-espace de projection;

un moyen de décomposition de sous-espace (103) configuré pour effectuer une décomposition en valeurs singulières de la première matrice de canal projetée, pour obtenir une première pluralité de vecteurs propres associés aux valeurs propres, ou pour effectuer une décomposition en valeurs singulières de la deuxième matrice de canal projetée, pour obtenir une deuxième pluralité de vecteurs propres associés aux valeurs propres;

un sélecteur (105) configuré pour sélectionner s vecteurs propres de la première pluralité de vecteurs propres, s étant égal ou supérieur à zéro et égal ou inférieur à m, ou pour sélectionner s vecteurs propres de la deuxième pluralité de vecteurs propres, s étant égal ou supérieur à zéro et égal ou inférieur à n;

un moyen d'exclusion de sous-espace (107) configuré pour soustraire un sous-espace couvert par les s vecteurs propres du sous-espace de projection couvert par l'ensemble de coefficients de projection, pour obtenir un sous-espace de projection réduit à utiliser comme sous-espace de projection dans une autre itération.

2. Appareil selon la revendication 1, dans lequel le moyen de pondération (101) est configuré pour pondérer la première matrice de canal et la deuxième matrice de canal par le même ensemble de coefficients de projection, pour obtenir les première et deuxième matrices de canal projetées représentant, respectivement, une projection des première et deuxième matrices de canal sur le même sous-espace de projection;

dans lequel le moyen de décomposition de sous-espace (103) est configuré pour effectuer une décomposition en valeurs singulières des première et deuxième matrices de canal projetées, pour obtenir une pluralité de vecteurs propres associés aux valeurs propres, la pluralité de vecteurs propres comprenant la première et la deuxième pluralité de vecteurs propres, et

dans lequel le sélecteur (105) est configuré pour sélectionner les s vecteurs propres en fonction d'une propriété de transmission associée à la transmission du premier ou du deuxième signal de transmission.

3. Appareil selon la revendication 2, dans lequel le sélecteur (105) est configuré pour sélectionner une certaine valeur propre de la pluralité de valeurs propres, la certaine valeur propre étant associée à la propriété de transmission, pour sélectionner un vecteur propre associé à certaines valeurs propres, et pour sélectionner s-1 vecteurs propres associés à l'utilisateur qui est associé à la certaine valeur propre, pour obtenir les s vecteurs propres.

4. Appareil selon les revendications 1 à 3, dans lequel le moyen d'exclusion de sous-espace (107) est configuré pour déterminer un ensemble de coefficients de sous-espace représentant le sous-espace à l'aide des s vecteurs propres, et pour soustraire l'ensemble de coefficients de sous-espace de l'ensemble de coefficients de projection, pour obtenir des coefficients de projection mis à jour représentant le sous-espace de projection réduit ;

dans lequel le moyen de pondération (101) est configuré pour pondérer la première matrice de canal et la deuxième matrice de canal par des coefficients de projection mis à jour, pour obtenir une première matrice de canal projetée mise à jour représentant une projection de la première matrice de canal sur le sous-espace de projection réduit, et pour obtenir une deuxième matrice de canal projetée mise à jour représentant une projection de la deuxième matrice de canal sur le sous-espace de projection réduit;

dans lequel le moyen de décomposition de sous-espace (103) est configuré pour effectuer une décomposition en valeurs singulières des première et deuxième matrices de canal projetées mises à jour, pour obtenir une pluralité de vecteurs propres associés à des valeurs propres, et dans lequel le sélecteur (105) est configuré pour sélectionner s autres vecteurs propres associés au premier utilisateur de la pluralité de vecteurs propres, s étant égal ou supérieur à zéro et égal ou inférieur à m, ou

pour sélectionner s autres vecteurs propres associés au deuxième utilisateur de la pluralité de vecteurs propres, s étant égal ou supérieur à zéro et égal ou inférieur à n, dans lequel un sous-espace couvert par les s autres vecteurs propres est orthogonal à un sous-espace couvert par les vecteurs propres fournis dans une itération précédente, et

dans lequel le moyen d'exclusion de sous-espace (107) est configuré pour soustraire un sous-espace couvert par les s autres vecteurs propres du sous-espace de projection réduit, pour obtenir un autre sous-espace de projection à utiliser comme sous-espace de projection dans une autre itération.

5. Appareil selon les revendications 1 à 4, dans lequel
le moyen de pondération (101) est configuré pour pondérer la première matrice de canal par un premier ensemble de coefficients de projection, pour obtenir une première matrice de canal projetée, le premier ensemble de coefficients de projection couvrant un sous-espace de projection, la première matrice de canal projetée représentant une projection de la première matrice de canal sur le sous-espace de projection;

dans lequel le moyen de décomposition de sous-espace (103) est configuré pour effectuer une décomposition en valeurs singulières de la première matrice de canal projetée, pour fournir une pluralité de valeurs propres associées aux vecteurs propres;

dans lequel le sélecteur (105) est configuré pour sélectionner m valeurs propres de la pluralité de valeurs propres, m étant égal ou supérieur à 1, et pour fournir m vecteurs propres associés aux m valeurs propres comme premier ensemble de coefficients de pondération, les m vecteurs propres couvrant le premier sous-espace;

dans lequel le moyen d'exclusion de sous-espace (107) est configuré pour fournir un deuxième ensemble de coefficients de projection couvrant un sous-espace de projection réduit, le moyen d'exclusion de sous-espace (107) étant configuré pour exclure le premier sous-espace du sous-espace de projection, pour obtenir le sous-espace de projection réduit couvert par le deuxième ensemble de coefficients de projection;

dans lequel le moyen de pondération (101) est configuré pour pondérer une deuxième matrice de canal représentant un deuxième canal associé au deuxième utilisateur par le deuxième ensemble de coefficients de projection, pour obtenir une deuxième matrice de canal projetée, la deuxième matrice de canal projetée représentant une projection de la deuxième matrice de canal sur le sous-espace de projection réduit;

dans lequel le moyen de décomposition de sous-espace (103) est configuré pour effectuer une décomposition en valeurs singulières de la deuxième matrice de canal projetée, pour obtenir une autre pluralité de valeurs propres associées aux vecteurs propres; et

dans lequel le sélecteur (105) est configuré pour sélectionner n valeurs propres de l'autre pluralité de valeurs propres, n étant égal ou supérieur à 1, et pour fournir n vecteurs propres associés aux n valeurs propres comme deuxième ensemble de coefficients de pondération, les n vecteurs propres couvrant le deuxième sous-espace.

6. Appareil selon la revendication 5, dans lequel le premier signal de transmission est à transmettre par t points de transmission et à recevoir par r points de réception, dans lequel le moyen de décomposition de sous-espace (103) est configuré pour fournir la pluralité de vecteurs propres disposés de manière à former une première matrice de vecteurs propres et une deuxième matrice de vecteurs propres, les vecteurs propres de la première matrice de vecteurs propres ayant t coefficients, les vecteurs propres de la deuxième matrice de vecteurs propres ayant r coefficients.

7. Appareil selon la revendication 5 ou 6, dans lequel le sélecteur (105) est configuré pour sélectionner les m valeurs propres de la pluralité de valeurs propres et pour sélectionner les n valeurs propres de l'autre pluralité de valeurs propres en fonction d'une propriété de transmission associée à la transmission du premier signal de transmission ou à la transmission du deuxième signal de transmission.

8. Appareil selon les revendications 1 à 9, dans lequel la propriété de transmission comprend la maximisation d'un taux de données du premier signal d'utilisateur, la maximisation d'un taux de données du deuxième signal d'utilisateur, la maximisation d'un taux de données du premier signal d'utilisateur pour un certain taux de données du deuxième signal d'utilisateur, la maximisation simultanée du taux de données du premier signal d'utilisateur et du deuxième signal d'utilisateur, la minimisation d'un retard de transmission associé à la transmission du premier signal d'utilisateur, la minimisation simultanée d'un retard de transmission associé à la transmission simultanée du premier signal d'utilisateur et du deuxième signal d'utilisateur, la qualité des conditions de service associées à la transmission du premier signal d'utilisateur ou du deuxième signal d'utilisateur ou l'atténuation du premier signal d'utilisateur ou du deuxième signal d'utilisateur pendant la transmission.

9. Appareil selon les revendications 1 à 8, dans lequel le moyen d'exclusion de sous-espace (107) est configuré pour générer un ensemble de coefficients comprenant des coefficients couvrant le premier sous-espace, et pour soustraire l'ensemble de coefficients du premier ensemble de coefficients de projection, pour fournir le deuxième ensemble de coefficients de projection.

10. Appareil selon les revendications 1 à 9, dans lequel l'ensemble de coefficients de projection est disposé de manière à former une matrice, et dans lequel le moyen de pondération (101) est configuré pour effectuer une multiplication matrice par matrice, pour obtenir la première ou la deuxième matrice de canal projetée.

11. Appareil selon les revendications 1 à 9, comprenant par ailleurs un analyseur de valeurs propres configuré pour analyser les propriétés des valeurs propres.

12. Appareil selon les revendications 1 à 11, dans lequel le premier signal d'utilisateur est associé à une sous-porteuse à une certaine fréquence, dans lequel le deuxième signal d'utilisateur est associé à une sous-porteuse à la certaine fréquence, dans lequel le moyen destiné à calculer est configuré pour calculer le premier et le deuxième ensemble de coefficients de pondération pour la certaine fréquence, de sorte que le premier signal de transmission et le deuxième signal de transmission soient des signaux à la certaine fréquence.

13. Appareil selon la revendication 12, l'appareil étant par ailleurs configuré pour générer un autre premier ensemble de coefficients de pondération à une autre certaine fréquence à utiliser pour pondérer un autre premier signal d'utilisateur associé au premier utilisateur et l'autre certaine fréquence, pour obtenir un autre premier signal de transmission à l'autre certaine fréquence, et pour générer un autre deuxième ensemble de coefficients de pondération à l'autre certaine fréquence à utiliser pour pondérer un autre deuxième signal d'utilisateur associé au deuxième utilisateur et l'autre certaine fréquence, pour obtenir un autre deuxième signal de transmission à l'autre certaine fréquence,

dans lequel le moyen destiné à calculer est configuré pour calculer p vecteurs propres couvrant un autre premier sous-espace d'un autre espace à l'autre certaine fréquence, p étant égal ou supérieur à 1, les p vecteurs propres formant l'autre premier ensemble de coefficients pour le premier utilisateur, et pour calculer q vecteurs propres couvrant un deuxième sous-espace d'encore un autre espace à l'autre certaine fréquence, les q vecteurs propres formant l'autre deuxième ensemble de coefficients de pondération, q étant égal ou supérieur à 1, l'encore autre sous-espace étant orthogonal à l'autre sous-espace.

14. Procédé pour générer de manière itérative un premier ensemble de coefficients de pondération et pour générer de manière itérative un deuxième ensemble de coefficients de pondération, le premier ensemble de coefficients de pondération étant à utiliser pour pondérer un premier signal d'utilisateur associé à un premier utilisateur, pour obtenir un premier signal de transmission, le deuxième ensemble de coefficients de pondération étant à utiliser pour pondérer un deuxième signal d'utilisateur, pour obtenir un deuxième signal de transmission, lors de la réalisation d'une attribution de sous-canal dans un système de communication MIMO à plusieurs porteuses d'un point à des points multiples, le procédé comprenant:

calculer m vecteurs propres couvrant un premier sous-espace d'un espace, m étant égal ou supérieur à 1, les m vecteurs propres formant le premier ensemble de coefficients de pondération pour le premier utilisateur, et calculer n vecteurs propres couvrant un deuxième sous-espace d'un autre espace, le deuxième sous-espace étant orthogonal au premier sous-espace, n étant égal ou supérieur à 1, les n vecteurs propres formant le deuxième ensemble de coefficients pour le deuxième utilisateur, de sorte que le premier signal de transmission représente une projection du premier signal d'utilisateur sur le premier sous-espace et le deuxième signal de transmission représente une projection du deuxième signal d'utilisateur sur le deuxième sous-espace,

dans lequel l'étape de calcul comprend les sous-étapes suivantes consistant à:

pondérer une première matrice de canal représentant un premier canal associé au premier utilisateur par un ensemble de coefficients de projection couvrant un sous-espace de projection, pour obtenir une première matrice de canal projetée représentant une projection de la première matrice de canal sur le sous-espace de projection, ou pondérer une deuxième matrice de canal représentant un deuxième canal associé au deuxième utilisateur par un ensemble de coefficients de projection couvrant un sous-espace de projection, pour obtenir une deuxième matrice de canal projetée représentant une projection de la deuxième matrice de canal sur le sous-espace de projection;
effectuer une décomposition en valeurs singulières de la première matrice de canal projetée, pour obtenir une première pluralité de vecteurs propres associés aux valeurs propres, ou effectuer une décomposition en valeurs singulières de la deuxième matrice de canal projetée, pour obtenir une deuxième pluralité de vecteurs propres associés aux valeurs propres;
sélectionner s vecteurs propres de la première pluralité de vecteurs propres, s étant égal ou supérieur à zéro et égal ou inférieur à m, ou sélectionner s vecteurs propres de la deuxième pluralité de vecteurs propres, s étant égal ou supérieur à zéro et égal ou inférieur à n;
soustraire un sous-espace couvert par les s vecteurs propres du sous-espace de projection couvert par l'ensemble de coefficients de projection, pour obtenir un sous-espace de projection réduit à utiliser comme sous-espace de projection dans une autre itération.

15. Programme d'ordinateur comprenant un moyen pour réaliser les étapes du procédé selon la revendication 14 lorsque le programme d'ordinateur est exécuté sur un ordinateur.

| weighter | ~101 |

| subspace decomposer | ~103 |

105
109
| selector | →

| subspace excluder | ~107 |

# FIG 1

Input $\xrightarrow{\quad H \quad}$ Algorithm $\xrightarrow{\quad V_k(n),\ U_k(n) \quad}$ Output
$$V_{(k,i)_i}(n),\ U_{(k,i)_i}(n)$$

## FIG 2

H(n)    Initializations: $j=1$, $T_1=I$

FIG 3

FIG 4

**FIG 5**

FIG 6

FIG 7

**FIG 8**

FIG 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. VISHWANATH ; N. JINDAL ; A.J. GOLDSMITH.** Duality, Achievable Rates, and Sum-Rate Capacity of Gaussian MIMO Broadcast Channels. *IEEE Trans. on Information Theory,* October 2003, vol. 49, 2658-2668
- **S. THOEN ; L. PERRE ; M. ENGELS ; H. MAN.** Adaptive Loading for OFDM/SDMA-Based Wireless Networks. *IEEE Trans. Communications,* 2002, vol. 50, 1798-1810
- **M. COSTA.** Writing on Dirty Paper. *IEEE Trans. on Information Theory,* May 1983, vol. 29, 439-441
- **G. CAIRE ; S. SHAMAI.** On the Achievable Throughput of a Multi-Antenna Gaussian Broadcast Channel. *IEEE Trans. on Information Theory,* July 2003, vol. 49, 1691-1706

- **G. GINIS ; J. CIOFFI.** A Multi-user Precoding Scheme achieving Crosstalk Cancellation with Application to DSL Systems. *Asilomar Conference on Signals, Systems and Computers,* October 2000, 1627-1631
- **C. WINDPASSINGER ; T. VENCEL ; R.F.H. FISCHER.** Precoding and Loading for BLAST-like Systems. *ICC'03,* May 2003, 3061-3065
- **R.L. CHOI ; M.T. IVRLAC ; R.D. MURCH ; J.A. NOSSEK.** Joint Transmit and Receive Multi-user MIMO Decomposition Approach for the Downlink of Multi-User MIMO Systems. *VTC Fall '03,* October 2003
- **X. ZHANG ; B. OTTERSTEN.** Joint Space-Frequency Optimization in Multi-user MIMO Systems. *IEEE Symposium on Signal Processing and Information Theory (ISSPIT,* 2003
- **J. CIOFFI.** A Multicarrier Primer. *ANSI TIE1.4 Committee Contribution,* November 1991